# EUROPEAN PATENT APPLICATION

(11) **EP 4 592 245 A1**
(43) Date of publication of application: **30.07.2025**
(21) Application number: 24875659.5
(22) Date of filing: 25.10.2024
(51) Int. Cl.: C01B 32/174, C09C 1/44, C09D 17/00, H01B 1/24, H01M 4/13, H01M 4/139, H01M 4/62

(54) **CARBON NANOTUBE DISPERSION COMPOSITION, MIXTURE SLURRY, ELECTRODE FILM, SECONDARY BATTERY, AND VEHICLE**

(30) Priority: 26.10.2023 JP 2023184181; 08.07.2024 JP 2024109392
(71) Applicant: artience Co., Ltd., Chuo-ku Tokyo 104-0031 (JP); TOYOCOLOR CO., LTD., Tokyo 104-8381 (JP)
(72) Inventor: MORITA Yu, Tokyo 104-8381 (JP); FUKAGAWA Soichiro, Tokyo 104-8381 (JP); TANAKA Sota, Tokyo 104-8381 (JP); KARUBE Akihiko, Tokyo 104-8381 (JP)
(74) Representative: SSM Sandmair
(86) International application number: PCT/JP2024/038203
(87) International publication number: WO 2025/089415

(57) **Abstract**

An embodiment of the invention relates to a carbon nanotube dispersion composition. The carbon nanotube dispersion composition includes carbon nanotubes, a dispersant, and a solvent. A content of metal foreign particles determined by Condition 1 as determined in advance is 1.0 mg or less.

## Description

### Technical Field

The embodiments of the invention relate to a carbon nanotube dispersion composition, a composite slurry, an electrode film, a secondary battery, and a vehicle.

### Related Art

With the widespread adoption of electric vehicles and the miniaturization, weight reduction and performance enhancement of portable devices, there is a demand for secondary batteries with high energy density, and further, for an increased capacity of such secondary batteries. With such background, due to the properties of high energy density and high voltage, non-aqueous electrolyte secondary batteries, particularly lithium-ion secondary batteries, using non-aqueous electrolytes, are used in many devices.

As negative electrode materials used in such lithium-ion secondary batteries, carbon materials represented by graphite, which have a large charge-discharge capacity per unit mass at a base potential close to lithium (Li), are used. However, the charge-discharge capacity per mass of the electrode materials are being used to a point close to the theoretical values, and the energy density per mass as a battery is approaching its limit. Therefore, to increase the utilization rate of the electrode, studies are conducted to reduce conductive additives and binders that do not contribute to discharge capacity.

### [Prior Art Document(s)]

### [Patent Document(s)]

Patent Document 1: Japanese Patent Application Laid-open No. 2010-174418
Patent Document 2: Japanese Patent No. 6962428
Patent Document 3: Japanese Patent Application Laid-open No. 2021-065846
Patent Document 4: Japanese Patent Application Laid-open No. 2022-046307
Patent Document 5: Specification of Chinese Patent Application Publication No. 118289749

### SUMMARY OF INVENTION

### Technical Problem

The conductive additive serves to form a conductive path inside the electrode, and it is required to be resistant to breakage due to expansion and contraction of the electrode film. To maintain the conductive paths with a small amount of conductive additive, it is effective to use a carbon material with a large specific surface area, specifically carbon nanotubes that are a type of nanocarbon. However, batteries using carbon nanotubes, while excellent in output properties, often have residual metal foreign particles derived from metal catalysts used in the synthesis of carbon nanotubes, leading to voltage drop defects.

In addition, metal foreign particles contained in the carbon nanotube dispersion composition may dissolve inside the secondary battery, precipitate in a dendrite-like manner, pierce through the separator, and become a cause of internal short circuits. Furthermore, when the content of metal foreign particles is high, the degradation of the electrolyte or active substance is more likely to occur due to high-temperature charge and discharge of the secondary battery, leading to the deterioration in high-temperature cycle properties. Therefore, it is required to reduce the amount of metal foreign particles contained in the carbon nanotube dispersion composition.

Therefore, in Patent Document 1, a method is considered where carbon nanotubes containing metal foreign particles such as iron, cobalt, and nickel are pulverized, and the metal foreign particles in the carbon nanotubes are removed by using an electromagnet.

In Patent Documents 2 and 3, technologies are disclosed where carbon nanotubes are pulverized through a dispersion process of carbon nanotubes, and then metal foreign particles are attached to a magnet to remove the metal foreign particles of carbon nanotubes.

In addition, Patent Document 4 proposes a method for removing metal foreign particles by circulating a dispersion containing a conductive additive through a primary filter multiple times in a circulation system, and then passing the dispersion through at least two filters arranged in series in a single pass.

Furthermore, Patent Document 5 proposes a method for removing metal foreign particles by passing a carbon nanotube dispersion composition through a magnetic filter and a polypropylene filtration membrane after obtaining the carbon nanotube dispersion composition.

However, the conventional methods, such as those in Patent Document 1 to 5, have limitations in reducing the metal content in the carbon nanotube dispersion composition, and concerns, such as increased viscosity due to the inhibition of dispersion stability due to metal foreign particles, and insufficient properties when used in secondary batteries, may arise.

Therefore, the disclosure aims to provide a composite slurry that can obtain an electrode film with high conductivity and adhesion by using a carbon nanotube dispersion composition having good dispersion properties and low initial viscosity. More specifically, the invention provides a secondary battery with excellent rate properties and high-temperature cycle properties, and a vehicle that has improved safety and fuel efficiency by being provided with such a secondary battery.

### Solution to Problem

The inventors of the invention have conducted intensive research to solve the issues. The inventors found that, with a carbon nanotube dispersion composition including carbon nanotubes, a dispersant, and a solvent and having a content of metal foreign particles determined according to Condition 1 equal to or less than 1.0 mg, the dispersion properties can be favorable and the initial viscosity can be low, and, by using such dispersion composition, an electrode with high conductivity and adhesion can be obtained. In addition, the inventor found that a secondary battery so obtained exhibits excellent rate properties and high-temperature cycle properties. Based on the findings, the inventors have arrived at the invention.

The invention includes embodiments as follows. However, the embodiments of the invention are not limited to the following.

An embodiment relates to a carbon nanotube dispersion composition. The carbon nanotube dispersion composition includes carbon nanotubes, a dispersant, and a solvent. A content of metal foreign particles determined by Condition 1 as follows is 1.0 mg or less.

### <Condition 1>

After the metal foreign particles in 20 kg of the carbon nanotube dispersion composition are recovered by using an electromagnet, which is equipped with 31 grid screens having a magnetic flux density of 16000 gauss, a spatial volume of 1.7 L, a diameter of 10 cm and a thickness of 1.3 cm, the metal foreign particles that are obtained through washing with the solvent are deposited on a filter with a disk diameter of 47 mm and an opening of 5 µm, and a weight of the metal foreign particles on the filter is then measured.

Another embodiment relates to a composite slurry including the carbon nanotube dispersion composition and an active substance.

Another embodiment includes an electrode film formed from the composite slurry.

Another embodiment relates to a secondary battery that includes a positive electrode and a negative electrode. At least one of the positive electrode and the negative electrode includes the electrode film.

Another embodiment includes a vehicle including the secondary battery.

Another embodiment relates to a method for manufacturing the carbon nanotube dispersion composition. The method includes all of Steps (1) to (3) as follows:
[Step (1): Pulverization step]
   a step of applying a shear force to the carbon nanotubes to pulverize the carbon nanotubes;
[Step (2): Magnetic separation step]
   a step of removing the metal foreign particles by using the electromagnet with a magnetic flux density of 10000 gauss or more and 20000 gauss or less; and
[Step (3): Filtration step]
   a step of performing filtration using a depth filter with a filtration accuracy of 5 µm or more and 50 µm or less.

### Effects of Invention

According to the embodiments of the invention, the carbon nanotube dispersion composition has good dispersion properties, low initial viscosity, and by using this carbon nanotube dispersion composition, an electrode film with excellent conductivity and adhesion can be obtained. Moreover, a secondary battery excelling in rate properties and high-temperature cycle properties can be obtained. As a result, it can be suitably used even for vehicle applications such as hybrid vehicles, plug-in hybrid vehicles, and electric vehicles, where high capacity, high output, and high durability are required for the secondary batteries to be mounted.

### BRIEF DESCRIPTION OF DRAWINGS

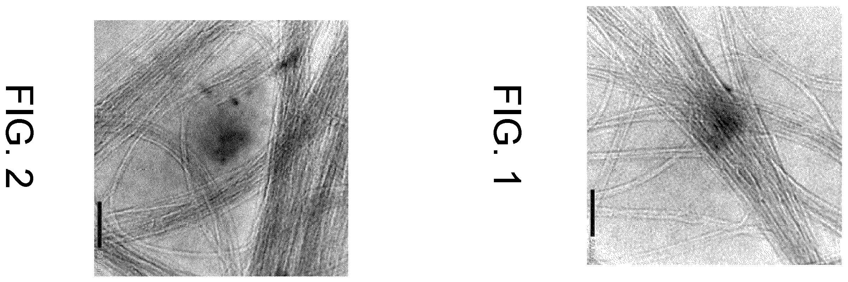

[FIG. 1] FIG. 1 is a photograph of carbon nanotubes (J1) used in the examples, observed at a magnification of one million times by using a transmission electron microscope.
[FIG. 2] FIG. 2 is a photograph of carbon nanotubes (K1) used in the examples, observed at a magnification of one million times by using a transmission electron microscope.

### DESCRIPTION OF EMBODIMENTS

The following describes in detail a carbon nanotube dispersion composition, a composite slurry, an electrode film, and a secondary battery according to an embodiment of the disclosure, but the disclosure is not limited to these. The numerical values specified in the specification are values obtained by the methods disclosed
in the embodiments or examples.

In addition, in the specification, the numerical range specified by using "to" includes values described before and after "to" as the range of lower limit and upper limit values.

In the specification, carbon nanotubes may be referred to as "CNT", and N-methyl-2-pyrrolidone as "NMP". In the specification, the carbon nanotube dispersion composition may be referred to as "CNT dispersion composition" or simply "dispersion composition".

In the invention, metal foreign particles do not relate to size or shape, and include fine metal powders, but do not include those that are dissolved and present in a metal ion state.

Unless otherwise noted, the various components appearing in this specification may be used alone or in combination of two or more types independently.

### <<Carbon nanotube dispersion composition>>

The carbon nanotube dispersion composition according to an embodiment of the invention is a carbon nanotube dispersion composition including carbon nanotubes, a dispersant, and a solvent, where the content of metal foreign particles determined by Condition 1 as follows is 1.0 mg or less.

### <Condition 1>

After the metal foreign particles in 20 kg of the carbon nanotube dispersion composition are recovered by using an electromagnet, which is equipped with 31 grid screens having a magnetic flux density of 16000 gauss, a spatial volume of 1.7 L, a diameter of 10 cm and a thickness of 1.3 cm, the metal foreign particles that are obtained through washing with the solvent are deposited on a filter with a disk diameter of 47 mm and an opening of 5 µm, and a weight of the metal foreign particles on the filter is then measured.

Specifically, the content of the metal foreign particles can be determined by the method described in the examples, for instance.

The content of the metal foreign particles contained in the carbon nanotube dispersion composition, as determined by Condition 1, is 1.0 mg or less. From the viewpoint of storage stability and high-temperature cycle properties of the secondary battery, the content is preferably 0.4 mg or less, and more preferably 0.1 mg or less. This enables a carbon nanotube dispersion composition with good dispersion properties and low initial viscosity. Moreover, by using the carbon nanotube dispersion composition, a secondary battery with excellent rate properties and high-temperature cycle properties can be obtained.

In addition, the solvent used at the time of washing the metal foreign particles recovered in <Condition 1> can be the same as the solvent included in the carbon nanotube dispersion composition. For example, in the case where the carbon nanotube dispersion composition includes carbon nanotubes, a dispersant, and a "solvent containing an amide-based polar solvent", the metal foreign particles can be washed with the same "solvent containing an amide-based polar solvent". In the case where the solvent consists only of an "amide-based polar solvent", washing can be carried out with the same "amide-based polar solvent".

For instance, in the case where the carbon nanotube dispersion composition includes carbon nanotubes, a dispersant, and a "solvent containing water", the metal foreign particles can be washed with the same "solvent containing water". In the case where the solvent consists only of "water", washing can be carried out with "water".

The metal foreign particles deposited on the filter may be washed by using an organic solvent. As the organic solvent, for example, a water-soluble organic solvent such as an alcohol (e.g., ethanol) can be used.

The carbon nanotube dispersion composition according to Condition 1 contains a content of 1.0 mg or less of metal foreign particles that are collected by a magnet and recovered by a filter with an opening of 5 µm. In the case where the content of metal foreign particles larger than 5 µm collected by the magnet is high, the particles may be exposed from the electrode surface, causing a short circuit in the secondary battery, and the battery may not function properly. Additionally, there is a possibility that metal foreign particles may dissolve in the electrolyte, leading to a significant increase in the self-discharge of the secondary battery.

The inventors have found that merely reducing the contents of metal elements such as metal ions contained in the carbon nanotube dispersion composition is not sufficient to satisfactorily meet the electrical properties when used in a secondary battery. The inventors have found that the content of metal foreign particles larger than 5 µm collected by a magnet is crucial.

The reason is presumably as follows. When synthesizing carbon nanotubes, a metal catalyst is used during at the time of manufacturing. As a result, metal derived from the metal catalyst may remain, and the carbon nanotubes may also encapsulate the metal catalyst. The metal derived from the metal catalyst encapsulated in the carbon nanotubes, as well as wear powder that may be included when dispersing carbon nanotubes, can become finely divided through dispersion. In such case, it becomes difficult to capture only the metal foreign particles even when a filter with high filtration accuracy is used.

Furthermore, metal foreign particles may include wear powder resulting from the abrasion of an inner wall or a pipe of the disperser used in the carbon nanotube dispersion process, and in some cases, from the dispersion medium, the stirring blade, etc. The wear powder derived from a portion of the pipes or the tanks made of materials including SUS304 or SUS316 used in the disperser or the piping can undergo changes in crystal structure due to an external stress applied to SUS304 or SUS316. As a result, the wear powder becomes metal foreign particles with magnetic properties. However, these particles are difficult to remove as the magnetic properties are weak.

The metal foreign particles can deteriorate the dispersion stability in the carbon nanotube dispersion composition, leading to an increase in viscosity. Moreover, in the case where the metal foreign particles are thicker than the separator, for example, 20 µm or more, the the metal foreign particles may pierce through the separator that separates the positive electrode and negative electrode, causing an internal short circuit and resulting in a voltage defect.

Furthermore, metal foreign particles are often oriented, and at the time of filtering the carbon nanotube dispersion composition, for example, even if a filter with a filtration accuracy of 20 µm is used, needle-shaped metal foreign particles of 20 µm or larger may still be mixed into the carbon nanotube dispersion composition. The metal foreign particles are weakly magnetic, and only those near a magnetic pole can be removed by using a magnet. It is difficult to reduce the metal foreign particles simply by using a stronger magnet or increasing the number of magnetic separation processes. However, by using a magnet with a magnetic force at a predetermined level or higher and a narrow pole gap, such as an electromagnet, it is possible to remove weakly magnetic metal foreign particles. By reducing the content of metal foreign particles larger than 5 µm to 1.0 mg or less, as determined by Condition 1, it is possible to produce a secondary battery that is not only highly safe but also exhibits good rate properties and high-temperature cycle properties.

It should be noted that the carbon nanotube dispersion composition refers to the state before the active substance is added. In this regard, the carbon nanotube dispersion composition is distinguished from a composite slurry that includes the active substance. In other words, the carbon nanotube dispersion composition substantially does not include the active substance. The concept excludes the state where the active substance is intentionally added to the carbon nanotube dispersion composition. The active substance may be 1 mass% or less, 0.5 mass% or less, or 0.1 mass% or less with respect to the total mass of the carbon nanotube dispersion composition, or the active substance may be 0 mass%. The active substance will be described later as mentioned.

The carbon nanotube dispersion composition, by including carbon nanotubes, in the case of being used as a conductive additive for a secondary battery electrode, enables the formation of a conductive path even by using a small amount, and making it possible to exhibit excellent rate properties and high-temperature cycle properties.

The metal powder derived from the metal used during manufacture remains and/or is encapsulated in the carbon nanotubes described above. If present as is, the metal may cause a voltage drop, etc. The encapsulated metal powder becomes exposed and finely divided through dispersion. Therefore, from the perspective of metal foreign matter removal efficiency, it is desirable to remove and reduce the metal foreign matter before the metal foreign matter is finely divided, that is, before or during the dispersion process.

Additionally, in the carbon nanotubes dispersion process, the metal foreign particles that may be mixed in as wear powder derived from a portion of a pipe or a tank including SUS304 and SUS316 can undergo changes in crystal structure due to an external stress such as dispersion, become magnetic, and cause a voltage drop when used in a secondary battery.

Therefore, it is desirable to reduce the metal foreign particles derived from wear powder before the metal foreign particles are finely divided by the dispersion process. Preferably, it is desirable to perform removal by using a magnet before or simultaneously with the dispersion process. Accordingly, by reducing the magnetic adhesion area of the metal foreign particles, the difficulty in sufficiently decreasing the metal foreign particles due to the decrease in foreign matter efficiency by using a magnet is prevented. In addition, the decrease in the stability of the carbon nanotube dispersion liquid due to the finely divided metal foreign particles can be suppressed.

The carbon nanotube dispersion composition is able to exhibit excellent dispersion properties and high-temperature cycle properties of the carbon nanotube dispersion composition by controlling the content of the metal foreign particles, in which metal foreign particles derived from carbon nanotube manufacturing and metal foreign particles from the wear powder of the disperser during the dispersion process are mixed, to be 1.0 mg or less as determined by Condition 1.

Methods to reduce the content of metal foreign particles to 1.0 mg or less as determined by Condition 1 include, for example, minimizing the introduction of metal foreign matter from raw materials, removing metal foreign matter derived from a dispersion device and process during the process, and filtering, with a filter, the dispersed carbon nanotube dispersion composition, etc. Additionally, for example, the content of metal foreign particles can be further reduced through a magnetic separation process using magnets with narrow pole gaps, such as electromagnets. Since metal foreign particles are often oriented, it is preferable to pass the particles through a magnet or a filter multiple times.

With such methods, it is possible to achieve both dispersion stability and excellent battery properties, which cannot be achieved by simply reducing the content of metal elements in the carbon nanotube dispersion composition.

Moreover, in the carbon nanotube dispersion composition, the total content of iron, cobalt, nickel, chromium, molybdenum, and copper is preferably as low as possible, and is preferably 100 ppm or less. The total content is more preferably 50 ppm or less, and even more preferably 10 ppm or less.

With the content of metal foreign particles determined by Condition 1 being 1.0 mg or less, and the total content of iron, cobalt, nickel, chromium, molybdenum, and copper falling within the above range, voltage abnormalities of the secondary battery can be further suppressed. The content of each of iron, cobalt, nickel, chromium, and molybdenum is preferably 10 ppm or less, preferably 5 ppm or less, and even more preferably 1 ppm or less. Additionally, the content of copper is preferably 5 ppm or less, preferably 1 ppm or less, and even more preferably 0.1 ppm or less.

Iron, cobalt, nickel, and molybdenum are used as catalyst raw materials in the production of carbon nanotubes. Since carbon nanotubes are produced in a reducing atmosphere, the iron, cobalt, nickel, and molybdenum are present in the form of pure metals encapsulated in the carbon nanotubes, and the oxidation-reduction potential is low. Therefore, the metals are dissolved in the electrolyte, precipitate on the negative electrode surface, and potentially cause voltage abnormalities and capacity decrease in the secondary battery. Furthermore, iron, nickel, and chromium may be introduced from the wear powder of a tank and a stirrer for preparing the carbon nanotube dispersion composition, while copper may be introduced from the motor of a dispersion device, etc. Among these, copper has a low oxidation-reduction potential and may dissolve in the electrolyte, precipitate in a dendritic form on the negative electrode surface, and may lead to voltage abnormalities in the secondary battery.
The content of the metal elements can be measured, for example, by ICP emission spectroscopy.

The content ratio of carbon nanotubes in the carbon nanotube dispersion composition is preferably 0.4 mass% or more and 10 mass% or less, more preferably 0.6 mass% or more and 8 mass% or less, and even more preferably 1 mass% or more and 6 mass% or less, based on the mass of the carbon nanotube dispersion composition (taking the mass of the carbon nanotube dispersion composition as 100 mass%). In the case where the carbon nanotube dispersion composition includes carbon nanotubes, a copolymer N, and an amide-based polar solvent, the content ratio of carbon nanotubes is preferably 1 mass% or more and 10 mass% or less, more preferably 2 mass% or more and 8 mass% or less, and even more preferably 3 mass% or more and 6 mass% or less, based on the mass of the carbon nanotube dispersion composition (taking the mass of the carbon nanotube dispersion composition as 100 mass%). The "copolymer N" will be described later.

The content of the dispersant is preferably 5 parts by mass or more and 200 parts by mass or less, more preferably 10 parts by mass or more and 100 parts by mass or less, and even more preferably 20 parts by mass or more and 50 parts by mass or less, with respect to 100 parts by mass of carbon nanotubes. In the case where the carbon nanotube dispersion composition includes carbon nanotubes, the copolymer N, and the amide-based polar solvent, the content of the copolymer N is preferably 5 parts by mass or more and 200 parts by mass or less, more preferably 10 parts by mass or more and 100 parts by mass or less, and even more preferably 20 parts by mass or more and 50 parts by mass or less, with respect to 100 parts by mass of carbon nanotubes. When the content of the dispersant is within the range, the dispersion stability of carbon nanotubes in the carbon nanotube dispersion composition tends to be favorable. Additionally, the peel strength of the electrode for secondary batteries becomes favorable.

The content ratio of the solvent is preferably 90 mass% to 99.6 mass%, more preferably 92 mass% to 99.4 mass%, and even more preferably 94 mass% to 99 mass%, based on the carbon nanotube dispersion composition (100 mass%). In the case where the carbon nanotube dispersion composition includes carbon nanotubes, the copolymer N, and the amide-based polar solvent, the content ratio of the amide-based polar solvent is preferably 90 mass% to 99 mass%, more preferably 92 mass% to 98 mass%, based on the carbon nanotube dispersion composition (100 mass%). When the content ratio is within the above range, a carbon nanotube dispersion composition with excellent fluidity and dispersion stability can be easily obtained. By using a carbon nanotube dispersion composition with excellent fluidity and dispersion stability, metal foreign particles can be easily removed, an electrode film with stable conductivity can be obtained, and the quality of the secondary battery is more stable.

In the case where the carbon nanotube dispersion composition includes carbon nanotubes, the copolymer N, and the amide-based polar solvent, it is preferable that the carbon nanotube dispersion composition has a moisture content of 100 ppm or more and 1500 ppm or less, and preferably 200 ppm or more and 1000 ppm or less. When the carbon nanotube dispersion composition further includes a binder resin and the moisture content is within the range, gelation of the composite slurry described later is suppressed, and a composite slurry and an electrode film with stable quality can be easily obtained. Particularly, in the case where the binder resin includes a fluorine resin, the moisture content tends to provide a favorable effect in suppressing gelation. When the moisture content is within the above range, there is a tendency to prevent the dissolution of metal encapsulated in the carbon nanotubes during dispersion. From the viewpoint of suppressing metal dissolution, the moisture content may be within the above range.

The initial viscosity of the carbon nanotube dispersion composition is preferably less than 2,000 mPa·s when measured by using a B-type viscometer at 100 rpm and 25°C. More preferably, the initial viscosity of the carbon nanotube dispersion composition is less than 1,000 mPa·s, and even more preferably less than 500 mPa·s. The initial viscosity of the carbon nanotube dispersion composition may be 100 mPa·s or more. In the case where the initial viscosity is within the range, the dispersion state of the carbon nanotubes included in the carbon nanotube dispersion composition is appropriate, and metal foreign matters are easily removed by using a filter or an electromagnet. A carbon nanotube dispersion composition with the initial viscosity within the range is considered to have an appropriate composition ratio of the carbon nanotubes, the dispersant, and the solvent, as well as an appropriate dispersion process, and the dispersion stability is considered as favorable.

Specifically, the measurement can be performed using the method described in the examples. The initial viscosity may be measured within 12 hours after the carbon nanotube dispersion composition is manufactured.

The carbon nanotube dispersion composition preferably has a cumulative particle size D₉₀ of 10 µm or less, more preferably 6.0 µm or less, and even more preferably 4.0 µm or less, as measured by a laser diffraction method. Additionally, the cumulative particle size D₉₀ is preferably 0.5 µm or more, more preferably 1.0 µm or more, and even more preferably 2.0 µm or more. In the case where the cumulative particle size D₉₀ is within the range, a conductive network of the carbon nanotubes is easily formed in the electrode. Furthermore, the filtration properties of the carbon nanotube dispersion composition are favorable, and metal foreign particles can be removed by using a filter with high filtration accuracy. Therefore, the inclusion of metal foreign particles inside the secondary battery can be suppressed. The rate properties and the cycle properties of the secondary battery can be further improved.

### <Carbon nanotubes>

The carbon nanotubes have a shape in which planar graphite is rolled into a cylindrical form. Examples of the carbon nanotubes may include single-layered carbon nanotubes and multi-layered carbon nanotubes. Carbon nanotubes may include single-layered carbon nanotubes or multi-layered carbon nanotubes, or the single-layered and multi-layered carbon nanotubes may also be mixed. For example, the carbon nanotubes may include multi-layered carbon nanotubes. Multi-layered carbon nanotubes possess a structure in which two or more layers of graphite are rolled, while single-layered carbon nanotubes possess a structure in which a single layer of graphite is rolled. The sidewalls of the carbon nanotubes do not necessarily need to have a graphite structure. For instance, carbon nanotubes with sidewalls possessing an amorphous structure can also be used as the carbon material.

The average outer diameter of the carbon nanotubes is preferably 1 nm or more and 25 nm or less, preferably 1 nm or more and 9 nm or less, and even more preferably 1 nm or more and 5 nm or less. In the case where the carbon nanotube dispersion composition includes carbon nanotubes, the copolymer N, and the amide-based polar solvent, the average outer diameter of the carbon nanotubes is preferably 1 nm or more and 25 nm or less, more preferably 3 nm or more and 20 nm or less, and even more preferably 4 nm or more and 15 nm or less. In the case where the average outer diameter is within the range, it is easier to form a good conductive network within the electrode, and during charge and discharge, the active substance inside the secondary battery is uniformly utilized, so the degradation of the active substance is suppressed, and the cycle properties of the secondary battery are improved. The average outer diameter of the carbon nanotubes can be obtained by observing the carbon nanotubes by using a transmission electron microscope, measuring the outer diameters of 300 carbon nanotubes extracted arbitrarily, and calculating the arithmetic mean of the measured values.

The BET specific surface area of the carbon nanotubes is preferably 100 m²/g or more and 1000 m²/g or less. In the case where the solvent includes the amide-based polar solvent, the BET specific surface area of the carbon nanotubes is preferably 100 m²/g or more and 1000 m²/g or less, more preferably 170 m²/g or more and 600 m²/g or less, and even more preferably 200 m²/g or more and 500 m²/g or less. In the case where the solvent includes water, the BET specific surface area of the carbon nanotubes is preferably 150 m²/g or more and 1000 m²/g or less, and more preferably 500 m²/g or more and 1000 m²/g or less. In the case where the carbon nanotube dispersion composition includes carbon nanotubes, the copolymer N, and the amide-based polar solvent, the BET specific surface area of the carbon nanotubes is preferably 100 m²/g or more and 1000 m²/g or less, more preferably 170 m²/g or more and 600 m²/g or less, and even more preferably 200 m²/g or more and 500 m²/g or less. In the case where the BET specific surface area is within the range, an efficient conductive network can be formed with a small amount, and the amount of the conductive material in the electrode can be reduced. This increases the design flexibility of the battery, such as increasing the amount of the active substance or binder resin. Furthermore, during the preparation of the composite slurry, it becomes easier for the active substance and the carbon nanotubes to form a composite. Therefore, an electrode film having a homogeneous conductive network where the active substance surface is covered by carbon nanotubes can be obtained, the electrolyte decomposition reaction at the interface between the electrolyte and the active substance can be suppressed, and the cycle properties of the battery can be improved.

The BET specific surface area can be measured by adopting the BET method described in JIS Z 8830: 2013.

The peak ratio of G-band and D-band (G/D ratio) of the carbon nanotubes is preferably 0.5 to 100, where G is the maximum peak intensity in the range of 1560 cm⁻¹ to 1600 cm⁻¹ and D is the maximum peak intensity in the range of 1310 cm⁻¹ to 1350 cm⁻¹ in the Raman spectrum. In the case where the solvent includes an amide-based polar solvent, the G/D ratio is preferably 0.5 to 10, and more preferably 0.7 to 4.5. In the case where the solvent includes water, the G/D ratio is preferably 5 to 100, and more preferably 10 to 50. In the case where the carbon nanotube dispersion composition includes carbon nanotubes, the copolymer N, and the amide-based polar solvent, the G/D ratio (peak ratio of G-band and D-band) of the carbon nanotubes is preferably 0.5 to 10, and more preferably 0.7 to 4.5, where G is the maximum peak intensity in the range of 1560 cm⁻¹ to 1600 cm⁻¹ and D is the maximum peak intensity in the range of 1310 cm⁻¹ to 1350 cm⁻¹ in the Raman spectrum.

In the case where the G/D ratio of the carbon nanotubes is within the range, it is considered that the contact resistance between carbon nanotubes becomes smaller, and good conductivity can be easily obtained. In addition, it is presumed that the amount of functional groups on the surface of the multi-layered carbon nanotubes is appropriate, resulting in good affinity with the solvent and improved dispersion properties.

In the case where the solvent includes water and the G/D ratio of the carbon nanotubes is 5 or more, it is often the case that the carbon nanotubes are aggregates of small outer diameter. However, if the carbon nanotubes possess the BET specific surface area and the G/D ratio within the ranges, the dispersant can act in the gaps of the carbon nanotubes. By performing appropriate dispersion process, a carbon nanotube dispersion composition with good conductivity can be easily obtained.

The volume resistivity of the carbon nanotubes is preferably 1.0×10⁻³ Ω·cm to 3.0×10⁻² Ω·cm, and more preferably 1.0×10⁻³ Ω·cm to 2.0×10⁻² Ω·cm. In the case where the carbon nanotube dispersion composition includes the carbon nanotubes, the copolymer N, and the amide-based polar solvent, the volume resistivity of the carbon nanotubes is preferably 1.0×10⁻² Ω·cm to 3.0x10² Ω·cm, and more preferably 1.0×10⁻² Ω·cm to 2.0×10⁻² Ω·cm. The volume resistivity of the carbon nanotubes can be measured by using a powder resistivity measurement device (for example, Lorester GP powder resistivity measurement system "MCP-PD-51" manufactured by Nitto Seiko Analytic Co., Ltd.). In the case where the volume resistivity is within the range, the conductivity of the electrode film becomes favorable, and a secondary battery with excellent rate properties and cycle properties can be obtained.

The repose angle of the carbon nanotubes is preferably 40° or more. More preferably, the repose angle of the carbon nanotubes is 45° or more, and even more preferably 50° or more. Additionally, the repose angle of the carbon nanotubes is preferably 85° or less, and more preferably 70° or less. The repose angle is an indicator that expresses the flowability of a powder, and carbon nanotubes with a repose angle within the range allow for easier removal of metal foreign particles encapsulated in the carbon nanotubes, making it easier to obtain a carbon nanotube dispersion composition with a low content of metal foreign particles. The repose angle can be measured by adopting the pouring method. The pouring method involves depositing powder on a table with a disk-shaped upper surface and measuring the powder, and is not easily affected by the material of the table, and the angle between the cone-shaped deposited powder and the horizontal plane can be measured by using a protractor, etc. Furthermore, the repose angle can also be measured by using a commercially available measuring device.

The repose angle of the carbon nanotubes can be controlled by processing with a conventional pulverization device. As the pulverization device, for example, a Henschel mixer, a super mixer, a Nauta mixer, a Trimix, a high-speed mixer, a mortar, a pin mill, a hammer mill, a pulverizer, an attritor, a jet mill, a cutter mill, a ball mill, a bead mill, a colloid mill, a conical mill, a disk mill, an edge mill, an wonder crusher, vibration mill, a ultrasonic homogenizer, etc., can be used. Particularly preferable are an attritor, a pin mill, a hammer mill, a jet mill, a cutter mill, a ball mill, a bead mill, and a vibration mill.

It is preferable that the carbon nanotubes may have metal foreign particles removed through a magnetic force using an electromagnet. For example, it is preferable to remove the metal foreign particles by setting up an electromagnet in a pulverization process or a filling process in the carbon nanotube manufacturing method and passing the carbon nanotubes therethrough. The carbon purity of the carbon nanotubes is preferably as high as possible, and in 100 mass% of carbon nanotubes, it is preferably 98.0 mass% or more, more preferably 99.5 mass% or more, even more preferably 99.8 mass% or more, and particularly preferably 99.9 mass% or more.

In other words, the content ratio of the metal foreign particles is preferably as low as possible, and in 100 mass% of carbon nanotubes, the content ratio of the metal foreign particles is preferably 2.0 mass% or less, more preferably 0.5 mass% or less, even more preferably 0.2 mass% or less, and particularly preferably 0.1 mass% or less.

By using carbon nanotubes produced by a method that does not use a metal catalyst as nuclei, or carbon nanotubes obtained by a conventional purification processing method such as an acid process, and by setting the content ratio of metal foreign particles to 2.0 mass% or less with respect to 100 mass% of carbon nanotubes, the content of metal foreign particles in the carbon nanotube dispersion composition can be reduced, and various properties of the secondary battery can be improved.

The carbon purity of the carbon nanotubes can be determined by the method described in the examples by using an ICP emission spectroscopy device.

### <Dispersant>

The dispersant is not particularly limited as long as it can stabilize the dispersion of carbon nanotubes, and surfactants (excluding resins), resin-type dispersants, etc., can be used. Depending on the properties required for dispersing carbon nanotubes, an appropriate type of the dispersant can be used in a suitable formulation amount.

For example, as a dispersant, a surfactant is preferable from the viewpoint of improving the wettability of carbon tubes to the solvent and obtaining a homogeneous carbon nanotube dispersion composition. Surfactants are mainly classified into anionic, cationic, nonionic, and amphoteric surfactants. As surfactants, polycarboxylate salts, naphthalene sulfonic acid-formalin condensates, and polyoxyethylene phenyl ethers can be used.

For example, resin-type dispersants are preferable from the viewpoint of electrochemical resistance, solubility in electrolyte solvents, and viscosity stability of the composite slurry. As resin-type dispersants, cellulose derivatives, polyvinyl alcohol, polyvinyl butyral, polyvinyl pyrrolidone, polyacrylic acid, or polyacrylonitrile-based polymers are preferable. In particular, cellulose derivatives, polyvinyl butyral, polyvinyl pyrrolidone, polyacrylic acid, and polyacrylonitrile-based polymers are preferable. Among cellulose derivatives, methyl cellulose, ethyl cellulose, and carboxymethyl cellulose are preferable. For resin-type dispersants, carboxymethyl cellulose, polyacrylic acid, polyvinyl pyrrolidone, and polyacrylonitrile-based polymers are preferable, and carboxymethyl cellulose, polyacrylic acid, and polyacrylonitrile-based polymers are particularly preferable.

In the case where an anionic surfactant is selected, the type thereof is not particularly limited. Specifically, examples may include fatty acid salts, polysulfonic acid salts, polycarboxylic acid salts, alkyl sulfate ester salts, alkylarylsulfonic acid salts, alkylnaphthalenesulfonic acid salts, dialkylsulfonic acid salts, dialkylsulfosuccinic acid salts, alkyl phosphate salts, polyoxyethylene alkyl ether sulfate salts, polyoxyethylene alkylaryl ether sulfate salts, naphthalene sulfonic acid formalin condensates, polyoxyethylene alkyl phosphate sulfonic acid salts, glycerol borate fatty acid esters, and polyoxyethylene glycerol fatty acid esters. However, the invention is not limited thereto. Furthermore, specifically, examples may include sodium dodecylbenzenesulfonate, sodium lauryl sulfate, sodium polyoxyethylene lauryl ether sulfate, polyoxyethylene nonylphenyl ether sulfate ester salt, and sodium salt of β-naphthalene sulfonic acid formalin condensate. However, the invention is not limited therto.. The anionic surfactant is preferably a polycarboxylate salt or a naphthalene sulfonic acid-formalin condensate. It is preferable that the nonionic surfactant is a polyoxyethylene phenyl ether.

As for cationic surfactants, examples may include alkylamine salts and quaternary ammonium salts. Specifically, examples may include stearylamine acetate, trimethyl coconut ammonium chloride, trimethyl allow ammonium chloride, dimethyl dioleyl ammonium chloride, methyl oleyl diethanol chloride, tetramethylammonium chloride, lauryl pyridinium chloride, lauryl pyridinium bromide, lauryl pyridinium disulfate, cetyl pyridinium bromide, 4-alkylmercaptopyridine, poly(vinylpyridine)-dodecyl bromide, and dodecylbenzyltriethylammonium chloride. However, the invention is not limited thereto.

As for amphoteric surfactants, examples may include amino carboxylic acid salts. However, the invention is not limited to these.

As for nonionic surfactants, examples may include polyoxyethylene alkyl ethers, polyoxyalkylene derivatives, polyoxyethylene phenyl ethers, sorbitan fatty acid esters, polyoxyethylene sorbitan fatty acid esters, and alkyl aryl ethers. However, the invention is not limited thereto. Specifically, examples may include polyoxyethylene lauryl ether, sorbitan fatty acid esters, and polyoxyethylene octylphenyl ether. However, the invention is not limited thereto.

The selected surfactant is not limited to a single surfactant. Therefore, it is possible to use a combination of two or more surfactants. For example, a combination of an anionic surfactant and a nonionic surfactant, and a combination of a cationic surfactant and a nonionic surfactant can be used. In such cases, it is preferable that the mixture amount for each surfactant component is set to an appropriate mixture amount. As a combination, a combination of an anionic surfactant and a nonionic surfactant is preferable. The anionic surfactant is preferably a polycarboxylate salt or a naphthalene sulfonic acid-formalin condensate. It is preferable that the nonionic surfactant is a polyoxyethylene phenyl ether.

As for specific resin-type dispersants, examples may include cellulose derivatives (cellulose acetate, cellulose acetate butyrate, cellulose butyrate, cyanoethyl cellulose, ethyl hydroxyethyl cellulose, nitrocellulose, methyl cellulose, ethyl cellulose, hydroxyethyl cellulose, hydroxypropyl cellulose, hydroxypropyl methyl cellulose, carboxymethyl cellulose, etc.), polyvinyl alcohol, polyvinyl butyral, polyvinylpyrrolidone, polyacrylic acid, polyacrylonitrile-based polymers, etc. In particular, cellulose derivatives, polyvinyl butyral, polyvinyl pyrrolidone, polyacrylic acid, and polyacrylonitrile-based polymers are preferable. Among cellulose derivatives, methyl cellulose, ethyl cellulose, and carboxymethyl cellulose are preferable. For resin-type dispersants, carboxymethyl cellulose, polyacrylic acid, polyvinyl pyrrolidone, and polyacrylonitrile-based polymers are preferable, and carboxymethyl cellulose, polyacrylic acid, and polyacrylonitrile-based polymers are particularly preferable.

As a resin-type dispersant, carboxymethyl cellulose can be used in the form of salts such as sodium salt of carboxymethyl cellulose, where the hydroxyl group of carboxymethyl cellulose is substituted with a carboxymethyl sodium group. For carboxymethyl cellulose as a resin-type dispersant, it is preferable to have an etherification degree of 0.5 to 1.5, and more preferably 0.6 to 1.0. The etherification degree of carboxymethyl cellulose can be measured according to conventional methods. By setting the etherification degree within the range, it is possible to impart an appropriate affinity for water and CNTs. Furthermore, in the case of use in a secondary battery, it is possible to prevent an issue such as the dispersant dissolving in the electrolyte and increasing the viscosity of the electrolyte in the battery. The etherification degree can be measured, for example, by the following method.

About 2.0 g of the sample is weighed accurately and placed in a 300 mL stoppered Erlenmeyer flask. 100 mL of nitric acid methanol (a liquid prepared by adding 100 mL of special grade concentrated HNO₃ to 1 L of anhydrous methanol) is added and shaken for 2 hours to convert Na-CMC to H-CMC. H-CMC is quantitatively transferred and sucked and filtrated to a glass filter 1G3 and then washed with 200 mL of 80% methanol. Subsequently, the product is replaced with 50 mL of anhydrous methanol, and is then sucked and filtered and then dried at 105°C for 2 hours. 1g to 1.5 g of the absolutely dry H-CMC is accurately weighed and placed in a 300 mL stoppered Erlenmeyer flask. The H-CMC is wet with 15 mL of 80% methanol, added with 50 mL of ^{N/10}NaOH, and by using phenolphthalein as an indicator that is shaken for two hours under room temperature, excess NaOH is back-titrated with ^{N/10}H₂SO₄.

The etherification degree is calculated according to the following formula:

((50×F'-^{N/10}H₂SO₄(mL)×F)/(absolutely dry weight (g) of H-CMC))×(1/10) = A

Etherification degree (M/c6)=(0.162A/(1-0.058A))
F: Factor of ^{N/10}H₂SO₄
F': Factor of ^{N/10}NaOH

The polyacrylonitrile-based polymer is a polymer having a nitrile group-containing structural unit, and the polyacrylonitrile-based polymer may also be a copolymer having a nitrile group-containing structural unit and a structural unit other than the nitrile group-containing structural unit. In the case where the polyacrylonitrile-based polymer is a copolymer, the content ratio of the nitrile group-containing structural unit is preferably 15 mass% or more and 60 mass% or less, more preferably 20 mass% or more and 55 mass% or less, and even more preferably 25 mass% or more and 50 mass% or less. Based on all the structural units included in the copolymer, examples of structural units other than the nitrile group-containing structural unit include an alkylene structural unit, an amide group-containing structural unit, and a carboxyl group-containing structural unit, etc. The polyacrylonitrile-based polymer preferably includes a copolymer (which may be referred to as "copolymer N") that includes an alkylene structural unit with a content ratio of 50 mass% or more and 75 mass% or less, and a nitrile group-containing structural unit with a content ratio of 25 mass% or more and 50 mass% or less.

The weight-average molecular weight of the resin-type dispersant is preferably 5,000 or more and 500,000 or less, preferably 10,000 or more and 300,000 or less, and even more preferably 10,000 or more and 100,000 or less. The use of a dispersant with an appropriate weight-average molecular weight improves the adsorption to carbon nanotubes and further enhances the stability of the carbon nanotube dispersion. In addition, in the case of using a dispersant exceeding the range, the viscosity of the carbon nanotube dispersion may increase, and in the case of using a disperser where the dispersed liquid passes through a narrow flow path such as a nozzle-type or valve-type high-pressure homogenizer, the dispersion efficiency may decrease. The resin-type dispersant may possess a binding ability in addition to the dispersion ability. A resin-type dispersant with binding ability may also serve as a binder. In the case where the resin-type dispersant also functions as a binder, the weight-average molecular weight of the resin-type dispersant is preferably greater than the case where the resin-type dispersant does not function as a binder. For a resin-type dispersant that also serves as a binder, for example, in the case for a carbon nanotube dispersion composition where the solvent includes an amide-based polar solvent, the weight-average molecular weight is preferably 20,000 or more and 250,000 or less, and more preferably 50,000 or more and 200,000 or less. For a resin-type dispersant that also functions as a binder, for example, in the case for a carbon nanotube dispersion composition where the solvent includes water, the weight-average molecular weight is preferably 260,000 or more and 450,000 or less, and more preferably 260,000 or more and 350,000 or less. Here, the weight-average molecular weight (Mw) of the resin-type dispersant can be measured by using gel permeation chromatography (GPC) equipped with a refractive index (RI) detector.

The carbon nanotube dispersion composition may include an inorganic base and/or inorganic metal salt in addition to the dispersant. As the inorganic base and inorganic metal salt, compounds having at least one of alkali metals and alkaline earth metals are preferable, and specifically, chlorides, hydroxides, carbonates, nitrates, sulfates, phosphates, tungstates, vanadates, molybdates, niobates, and borates of alkali metals and alkaline earth metals can be mentioned. Among these, chlorides, hydroxides, and carbonates of alkali metals and alkaline earth metals are preferable for ease of supplying cations. Examples of alkali metal hydroxides may include lithium hydroxide, sodium hydroxide, potassium hydroxide, etc. Examples of alkaline earth metal hydroxides may include calcium hydroxide and magnesium hydroxide. Examples of alkali metal carbonates include lithium carbonate, lithium hydrogen carbonate, sodium carbonate, sodium hydrogen carbonate, potassium carbonate, and potassium hydrogen carbonate. Examples of alkaline earth metal carbonates include calcium carbonate and magnesium carbonate. Among the substances, lithium hydroxide, sodium hydroxide, lithium carbonate, and sodium carbonate are more preferable.

The carbon nanotube dispersion composition may include an acid in addition to the dispersant. By adding an acid, the charge state in the dispersion system and the balance between hydrophilic and hydrophobic parts may change, and the dispersion properties may be improved. The type of acid is not particularly limited, and one type or a combination of multiple types may be used. The acid may be, for example, an organic acid or inorganic acid with 6 or less carbon atoms. For example, examples may include oxalic acid, lactic acid, citric acid, acetic acid, malonic acid, hydrochloric acid, nitric acid, sulfuric acid, boric acid, phosphoric acid, etc. In the case where the active substance included in the composite slurry to be described later is, for example, a negative electrode active substance containing lithium and is basic, the dispersion properties of the carbon nanotube dispersion composition may deteriorate, resulting in increased viscosity. However, in the case where an acid is included in addition to the dispersant, the pH change of the slurry can be alleviated, and a rapid increase in the viscosity of the composite slurry can be suppressed. Therefore, the composite slurry has excellent storage stability, coating unevenness of the electrode using the composite slurry can be suppressed, and the quality of the battery can be more easily stabilized.

The carbon nanotube dispersion composition may include a defoaming agent in addition to the dispersant. The defoaming agent can be any commercially available defoaming agent, wetting agent, etc. , that has a defoaming effect, and can be used arbitrarily. One type or a combination of multiple types may be used.

### [Copolymer N]

The copolymer N includes an alkylene structural unit with a content ratio of 50 mass% or more and 75 mass% or less, and a nitrile group-containing structural unit with a content ratio of 25 mass% or more and 50 mass% or less.

By using such copolymer N, a carbon nanotube dispersion composition with excellent dispersion properties and oxidation resistance can be obtained. Due to the low solubility in the electrolyte, the ionic conductivity of the electrolyte is less likely to decrease. As a result, a secondary battery using the composition can have excellent rate properties and high-temperature cycle properties. The copolymer N can be obtained, for example, by copolymerizing a monomer mixture including a conjugated diene monomer and a nitrile group-containing monomer, partially adding hydrogen to the carbon-carbon double bonds of the structural units derived from the conjugated diene monomer by hydrogenation, resulting in a copolymer N having an alkylene structural unit and a nitrile group-containing structural unit. Specifically, it can be manufactured by the method described later.

The Mooney viscosity of the copolymer N is preferably 65 or less, more preferably 60 or less, further preferably 50 or less, and particularly preferably 35 or less. In addition, the Mooney viscosity of the copolymer N is preferably 20 or more, and more preferably 35 or more.

"Mooney viscosity (ML1+4, 100°C)" in the embodiment of the disclosure can be measured at the temperature of 100°C in accordance with JIS K6300-1:2013.

By setting the Mooney viscosity within the range, it is estimated that an appropriate repulsive force can be imparted to the carbon nanotubes with the copolymer N adsorbed, thereby improving the dispersion stability. With a value of 20 or more, a good balance between solubility in the amide-based polar solvent used as the solvent and adsorption to the carbon nanotubes is achieved, and the dispersion properties of the carbon nanotubes are improved. In addition, in the case where the Mooney viscosity is 65 or less, it is preferable because the viscosity of the carbon nanotube dispersion composition does not become excessively high, the decrease in energy transfer efficiency of the disperser can be suppressed, and metal foreign particles originating from raw materials can be efficiently removed by methods such as magnets, filtration, and centrifugation. Thus, voltage defects in the secondary battery caused by metal foreign particles can be prevented.

The copolymer N may have appropriate fluidity at room temperature as long as the copolymer N includes an alkylene structural unit with a content ratio of 50 mass% or more and 75 mass% or less, and a nitrile group-containing structural unit with a content ratio of 25 mass% or more and 50 mass% or less.

The weight average molecular weight (Mw) of the copolymer N is preferably 20,000 or more and 200,000 or less, and more preferably 20,000 or more and 150,000 or less. In the case where the weight average molecular weight is within the range, the adsorption to carbon nanotubes and the affinity for the dispersion medium tend to be favorable. The weight average molecular weight is the weight average molecular weight in polystyrene equivalent, which can be measured by gel permeation chromatography (GPC).

The method for adjusting the Mooney viscosity is not particularly limited, and it can be adjusted by changing, for example, the composition of the polymer (types of structural units, content, hydrogenation rate, etc.), structure (linearity rate, etc.), molecular weight, preparation conditions (polymerization temperature, amount of molecular weight regulator, etc.)

In addition, it is preferable that the copolymer N used has had metal foreign particles removed by a filtration process using a filter and/or a magnetic separation process using a magnetic force with an electromagnet. For example, it is preferable to remove metal foreign particles by setting a filter or an electromagnet in a grinding process or a filling process of the copolymer N and passing the copolymer N through the filter or the electromagnet.

The magnetic separation process of the copolymer N may be performed after dissolving the copolymer N in an amide-based polar solvent or the like to form a copolymer N solution.

### (Alkylene structural unit)

The alkylene structural unit is a structural unit containing an alkylene structure, and preferably a structural unit consisting of only an alkylene structure. The alkylene structure is preferably a linear alkylene structure or a branched alkylene structure. However, the case with a structural unit having a nitrile group is excluded.

The alkylene structural unit preferably includes a structural unit represented by General Formula (1A) as follows.

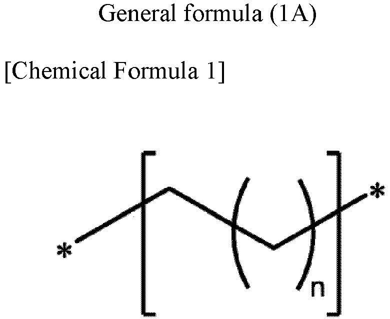

In General Formula (1A), n represents an integer of 1 or more. It is preferable that n is an integer of 2 or more, and more preferably an integer of 3 or more. It is preferable that n is an integer of 5 or less, and more preferably an integer of 4 or less. In particular, it is preferable that n is 3.

The alkylene structural unit preferably includes a structural unit represented by General Formula (1B) as follows.

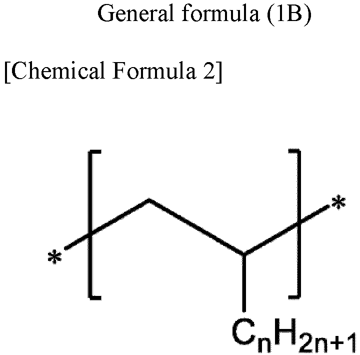

In General Formula (1B), n represents an integer of 1 or more. It is preferable that n is an integer of 4 or less, more preferably an integer of 3 or less, and even more preferably an integer of 2 or less. In particular, it is preferable that n is 2.

The method for introducing the alkylene structural unit into the copolymer N is not particularly limited, but examples include methods (1a) or (1b) as follows.

In the method (1a), a copolymer is prepared through polymerization reaction using a monomer composition containing a conjugated diene monomer. The prepared copolymer includes a monomer unit derived from the conjugated diene monomer. In an embodiment of the disclosure, "monomer units derived from the conjugated diene monomer" may be referred to as a "conjugated diene monomer units", and a monomer unit derived from other monomers may be similarly abbreviated. Next, by adding hydrogen to the conjugated diene monomer unit, at least a part of the conjugated diene monomer unit is converted into the alkylene structural unit. Hereinafter, "adding hydrogen" may be referred to as "hydrogenation". The eventually obtained copolymer N includes, as the alkylene structural unit, a unit obtained by hydrogenating the conjugated diene monomer unit.

It should be noted that the conjugated diene monomer unit at least includes one monomer unit having one carbon-carbon double bond. For example, the 1,3-butadiene monomer unit, which is a conjugated diene monomer unit, may include at least one monomer unit selected from the group consisting of monomer units having a cis-1,4 structure, a trans-1,4 structure, and a 1,2 structure, and may include two or more types of monomer units. In addition, the conjugated diene monomer unit may further include a monomer unit that does not have a carbon-carbon double bond and includes a branching point. In the specification, the "branching point" refers to a branching point in a branched polymer, and in the case where the conjugated diene monomer unit includes a monomer unit containing a branching point, the prepared copolymer and the copolymer are branched polymers.

In the method (1b), a copolymer is prepared through polymerization reaction using a monomer composition containing an α-olefin monomer. The prepared copolymer includes an α-olefin monomer unit. The eventually obtained copolymer N includes the α-olefin monomer unit as the alkylene structural unit.

Among the above, the method (1a) is preferred as the manufacture of copolymer N is easy. The number of carbon atoms in the conjugated diene monomer is 4 or more, and preferably 4 to 6. Examples of the conjugated diene monomer include conjugated diene compounds such as 1,3-butadiene, isoprene, 2,3-dimethyl-1,3-butadiene, and 1,3-pentadiene. Among these, 1,3-butadiene is preferred. The alkylene structural unit preferably includes a structural unit obtained by hydrogenating the conjugated diene monomer unit (hydrogenated conjugated diene monomer unit), and more preferably includes a structural unit obtained by hydrogenating a 1,3-butadiene monomer unit (hydrogenated 1,3-butadiene monomer unit). The conjugated diene monomer can be used alone or in combination of two or more types.

The hydrogenation is preferably a method that can selectively hydrogenate the conjugated diene monomer unit. As the hydrogenation method, examples may include conventional methods such as oil-phase hydrogenation method or water-phase hydrogenation method.

Hydrogenation can be carried out by a conventional method. For example, hydrogenation can be performed by processing a copolymer having a conjugated diene monomer unit with hydrogen gas in the presence of a hydrogenation catalyst while the copolymer is dissolved in an appropriate solvent. Examples of the hydrogenation catalyst include nickel, palladium, platinum, copper, etc.

In the method (1b), the number of carbon atoms in the α-olefin monomer is 2 or more, preferably 3 or more, and more preferably 4 or more. The number of carbon atoms in the α-olefin monomer is preferably 6 or less, and more preferably 5 or less. Examples of the α-olefin monomer include α-olefin compounds such as ethylene, propylene, 1-butene, and 1-hexene. The α-olefin monomer can be used alone or in combination of two or more types.

The alkylene structural unit preferably includes at least one selected from the group consisting of a structural unit containing a linear alkylene structure and a structural unit containing a branched alkylene structure. More preferably, the alkylene structural unit includes at least one selected from the group consisting of a structural unit consisting only of a linear alkylene structure and a structural unit consisting only of a branched alkylene structure. Even more preferably, the alkylene structural unit includes at least one selected from the group consisting of a structural unit represented by the formula (1A) and a structural unit represented by the formula (1B).

The content ratio of the alkylene structural unit is 50 mass% or more and 75 mass% or less based on the mass of the copolymer N (i.e., when the mass of copolymer N is 100 mass%). The content ratio of the alkylene structural unit is preferably 55 mass% or more. Also, the content ratio is preferably 70 mass% or less, and more preferably 65 mass% or less. By setting the content ratio of the alkylene structural unit within the range, the adsorption to carbon nanotubes and the affinity for the dispersion medium can be controlled, allowing the carbon nanotubes to exist stably in the dispersion medium, resulting in favorable stability of the dispersion composition. Additionally, the affinity of the copolymer N for the electrolyte can be controlled, preventing issues such as the copolymer N dissolving in the electrolyte inside the battery and increasing the resistance of the electrolyte.

### (Nitrile group-containing structural unit)

The nitrile group-containing structural unit is a structural unit having a nitrile group. A structural unit having an alkylene structure substituted with a nitrile group is preferred, and a structural unit consisting only of an alkylene structure substituted with a nitrile group is more preferred. The alkylene structure is preferably a linear or branched alkylene structure. The nitrile group-containing structural unit may further include a structural unit containing (or consisting only of) an alkyl structure substituted with a nitrile group. The number of nitrile group included in the nitrile group-containing structural unit is preferably one.

The nitrile group-containing structural unit preferably has a structural unit represented by General Formula (2A) as follows.

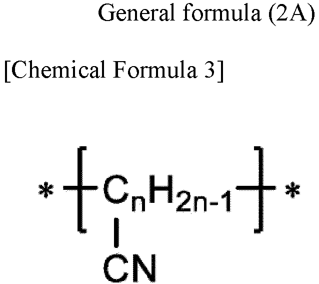

In General Formula (2A), n represents an integer of 2 or more. It is preferable that n is an integer of 6 or less, more preferably an integer of 4 or less, and even more preferably an integer of 3 or less. In particular, it is preferable that n is 2.

The nitrile group-containing structural unit may also have a structural unit represented by General Formula (2B) as follows.

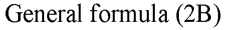

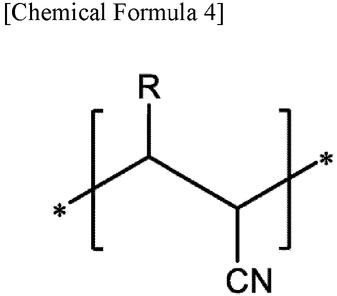

In General Formula (2B), R represents a methyl group.

The method of introducing the nitrile group-containing structural unit into the copolymer N is not particularly limited, but a method of preparing a copolymer by polymerization reaction using a monomer composition including a nitrile group-containing monomer (method (2a)) can be preferably used. The eventually obtained copolymer N possesses the nitrile group-containing monomer unit as the nitrile group-containing structural unit. As the nitrile group-containing monomer that can form the nitrile group-containing structural unit, monomers having a polymerizable carbon-carbon double bond and a nitrile group can be mentioned. For example, an α,β-ethylenically unsaturated compound having a nitrile group and the like can be mentioned, specifically, acrylonitrile, methacrylonitrile, and the like. In particular, from the viewpoint of increasing the intermolecular force between the copolymers N and/or between the copolymer N and the dispersoid (adsorbate), the nitrile group-containing monomer preferably includes acrylonitrile. The nitrile group-containing monomer can be used alone or in a combination of two or more kinds.

The content ratio of the nitrile group-containing structural unit is 25 mass% or more and 50 mass% or less based on the mass of the copolymer N (i.e., when the mass of the copolymer N is 100 mass%). The content ratio of the alkylene structural unit is preferably 30 mass% or more. Also, the content ratio is preferably 45 mass% or less, and more preferably 40 mass% or less. By setting the content ratio of the nitrile group-containing structural unit within the range, the adsorption to carbon nanotubes and the affinity for the dispersion medium can be controlled, allowing the carbon nanotubes to exist stably in the dispersion medium, resulting in favorable stability of the dispersion composition. Additionally, the affinity of the copolymer N for the electrolyte can be controlled, preventing issues such as the copolymer N dissolving in the electrolyte inside the battery and increasing the resistance of the electrolyte.

### (Other Structural Units)

The copolymer N may possess structural units other than the alkylene structural unit and the nitrile group-containing structural unit as needed, without affecting the effect of the invention. Other structural units include amide group-containing structural units, carboxyl group-containing structural units, and the like.

### <Solvent>

As for the solvent, it is not particularly limited as long as carbon nanotubes can be dispersed, but it is preferably a solvent selected from the group consisting of water and water-soluble organic solvents, or a mixed solvent including two or more selected from the group. For example, the solvent may be a solvent consisting of only one kind selected from the group consisting of water and water-soluble organic solvents, or a mixed solvent consisting of two or more selected from the group.

As water-soluble organic solvents, examples may include: alcohol-based solvents (methanol, ethanol, propanol, isopropanol, butanol, isobutanol, secondary butanol, tertiary butanol, benzyl alcohol, etc.), polyhydric alcohol-based solvents (ethylene glycol, diethylene glycol, triethylene glycol, polyethylene glycol, propylene glycol, dipropylene glycol, polypropylene glycol, butylene glycol, hexanediol, pentanediol, glycerin, hexanetriol, thiodiglycol, etc.), polyhydric alcohol ether-based solvents (ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, propylene glycol monomethyl ether, propylene glycol monoethyl ether, propylene glycol monobutyl ether, ethylene glycol monomethyl ether acetate, triethylene glycol monomethyl ether, triethylene glycol monoethyl ether, triethylene glycol monobutyl ether, ethylene glycol monophenyl ether, propylene glycol monophenyl ether, etc.), amine-based solvents (ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, tetramethylpropylenediamine, etc.), amide-based solvents (N-methyl-2-pyrrolidone (NMP), N-ethyl-2-pyrrolidone (NEP), N,N-dimethylformamide, N,N-dimethylacetamide, N,N-diethylacetamide, N-methylcaprolactam, etc.), heterocyclics (cyclohexylpyrrolidone, 2-oxazolidone, 1,3-dimethyl-2-imidazolidinone, γ-butyrolactone, etc. ), sulfoxide-based solvents (dimethyl sulfoxide, etc.), sulfone-based solvents (hexamethylphosphorotriamide, sulfolane, etc.), lower ketone-based solvents (acetone, methyl ethyl ketone, etc.), and others such as tetrahydrofuran, urea, and acetonitrile.

### [Water]

For example, the solvent preferably includes water. In the case where the solvent includes water, with respect to 100 mass% of the solvent, the content ratio of water may be 50 mass% or more, more than 50 mass%, 75 mass% or more, or 90 mass% or more. It is preferable that the content ratio of water is 95 mass% or more, and it is more preferable that the content ratio of water is 98 mass% or more. The solvent may be a single solvent of water.

### [Amide-based polar solvent]

For example, it is preferable that the solvent includes an amide-based polar solvent. Examples of the amide-based polar solvent include N-methyl-2-pyrrolidone (NMP), N-ethyl-2-pyrrolidone (NEP), N,N-dimethylformamide, N,N-dimethylacetamide, N,N-diethylacetamide, and N-methylcaprolactam. Among these, it is more preferable to include at least one selected from the group consisting of N-methyl-2-pyrrolidone and N-ethyl-2-pyrrolidone.

In the case where the solvent includes an amide-based polar solvent, the content ratio of the amide-based polar solvent may be 50 mass% or more, more than 50 mass%, 75 mass% or more, or 90 mass% or more with respect to 100 mass% of the solvent. It is preferable that the content ratio of the amide-based polar solvent is 95 mass% or more, and it is more preferable that the content ratio of the amide-based polar solvent is 98 mass% or more. The solvent may be substantially a single solvent of the amide-based polar solvent.

The water content in the solvent including the amide-based polar solvent is preferably 100 ppm or more and 1500 ppm or less, and more preferably 100 ppm or more and 1000 ppm or less. In the case where the water content is within the above range, the alkali metal encapsulated in the carbon nanotubes may dissolve in the carbon nanotube dispersion composition, and the dispersion stability of the carbon nanotube dispersion composition may become favorable.

### [Optional components]

The carbon nanotube dispersion composition may appropriately include optional components such as alkali metal hydroxide, alkali metal carbonate, a wetting agent, a pH adjusting agent, a wetting and penetrating agent, a leveling agent, other additives, and other conductive materials other than carbon nanotubes, as needed, to an extent that does not hinder the purpose of the disclosure. The optional components can be added at any timing, such as before the preparation of the carbon nanotube dispersion composition, during mixing, after mixing, or any combination thereof.

Examples of alkali metal hydroxides may include lithium hydroxide, sodium hydroxide, and potassium hydroxide.

Examples of the alkali metal carbonate include lithium carbonate, sodium carbonate, and potassium carbonate.

In the case of using the alkali metal hydroxide and/or the alkali metal carbonate, the content of each is preferably 0.5 parts by mass or more and 4 parts by mass or less, more preferably 1 part by mass or more and 3 parts by mass or less, and even more preferably 1.5 parts by mass or more and 2.5 parts by mass or less, with respect to 100 parts by mass of the copolymer N. In the case of using both the alkali metal hydroxide and the alkali metal carbonate, it is preferable that the total content is within the range. In the case where the alkali metal hydroxide and/or the alkali metal carbonate is used, the wettability of the carbon nanotubes improves, and the dispersion properties further improves. In addition, since the dispersion progresses until the target viscosity in a short time, the carbon nanotubes are less likely to be damaged, and an electrode film and a secondary battery with good conductivity can be easily obtained.

### (Manufacturing method of carbon nanotube dispersion composition)

The carbon nanotube dispersion composition of the embodiment is obtained by dispersing a mixture containing carbon nanotubes, a dispersant, and a solvent by using a disperser.

Although the manufacturing method is not particularly limited, it preferably includes: a process of applying a shear force to pulverize the carbon nanotubes; and a metal foreign matter removal process such as a magnetic separation process for removing magnetic foreign matters, a filtration process using a filter, and a centrifugation process, in order to make the content of metal foreign particles in the carbon nanotube dispersion composition 1.0 mg or less as determined by Condition 1. Among the metal foreign matter removal processes, at least one of the magnetic separation process and the filtration process is preferable.

The metal foreign matter removal process may be performed at any timing, such as before dispersion, during dispersion, or after dispersion of the carbon nanotube dispersion composition. It is preferable to remove the metal foreign particles before the particles are pulverized by the dispersion process, and it is preferable to include the metal foreign matter removal process before and/or during the dispersion of the carbon nanotube dispersion composition.

A manufacturing method for the carbon nanotube dispersion composition that includes Step (1) to (3) as follows is preferable.
[Step (1): Pulverization step]
   a step of applying a shear force to the carbon nanotubes to pulverize the carbon nanotubes;
[Step (2): Magnetic separation step]
   a step of removing the metal foreign particles by using an electromagnet with a magnetic flux density of 10000 gauss or more and 20000 gauss or less; and
[Step (3): Filtration step]
   a step of performing filtration using a depth filter with a filtration accuracy of 5 µm or more and 50 µm or less.

The order of Step (1), Step (2), and Step (3) is not particularly limited, and the metal foreign matter removal process of Step (2) and Step (3) may be performed before or after Step (1), simultaneous with Step (1), or a combination thereof. Preferably, the process includes each step in the order of Step (1), Step (2), and Step (3), or Step (1) and Step (2) are performed simultaneously, followed by Step (3).

In this way, with [Step (1): Pulverization step], the metal foreign particles encapsulated in the carbon nanotubes are exposed, and then or simultaneously, magnetic metal foreign particles can be removed in [Step (2): Magnetic separation steps] by bringing them into contact with a magnet, and then with [ (3): Filtration Process] weakly magnetic metal foreign particles (such as those with large particle sizes but weak magnetism, or those with particle sizes too small to be supplemented by the magnet due to a small magnetic adhesion area and are carried away by the liquid) that cannot be completely removed by the magnet can be removed.

### [Process of pulverizing carbon nanotubes]

In the process of pulverizing carbon nanotubes by applying a shear force to the carbon nanotubes, the carbon nanotubes can be subjected to a pulverization process by using a dispersion device or the like, in a dry and/or wet method.

The dispersion device used for pulverizing carbon nanotubes is not particularly limited. As the dispersion device, a disperser normally used for pigment dispersion and the like can be used.

For example, mixer types such as dispersers, homomixers, planetary mixers, etc.; homogenizer types (such as BRANSON's Advanced Digital Sonifer (registered trademark), MODEL 450DA, M-Technique's "Clearmix", PRIMIX's "Filmix", Silverson's "Abramix", etc. ); paint conditioners (manufactured by Red Devil); colloid mill types (such as PUC's "PUC Colloid Mill", IKA's "Colloid Mill MK"); cone mills (such as "Cone Mill MKO" by IKA, etc.); media-type dispersers including ball mills, sand mills (such as "Dyno-mill" manufactured by Shinmaru Enterprises), attritors, pearl mills (such as "DCP Mill" manufactured by Eirich), and co-ball mill, etc.; high-pressure homogenizers (such as "Genus PY" manufactured by Genus, "Star Burst" manufactured by Sugino Machine); medialess dispersers such as "HC3 Series" manufactured by Sanmaru Machinery Industry, "HV-H Series" by Izumi Food Machinery, "R-Model" by SPX Flow, "Clear SS-5" by M-Technique, "MICROS" by Nara Machinery; and other devices such as roll mills. However, the invention is not limited thereto.

It is desirable to have less contamination from wear powder during the pulverization process, so a medialess disperser is preferred. The rotor and the stator of the disperser are preferably made of ceramics. In the case of wet dispersion using a bead mill, the dispersion media should also preferably be made of ceramics. In the case of using a bead mill as a wet disperser, before the dispersion process performed by using a bead mill, it is preferable to use the bead mill after pulverizing the carbon nanotubes by applying a shear force to the carbon nanotubes in advance by using a media disperser prior to performing the dispersion mill using the bead mill. This is because in the case of operating the bead mill at a high peripheral speed on a low-viscosity dispersion where the pulverization of carbon nanotubes has not progressed, the beads are prone to wear. Additionally, when using a high-pressure homogenizer as the disperser, if wear powder from the beads is present during the dispersion process, there is a risk of nozzle clogging or valve damage in the high-pressure homogenizer.

In the case of using a high-pressure homogenizer as the disperser, for example, a nozzle-type high-pressure homogenizer that discharges a treatment liquid from a nozzle, or a valve-type high-pressure homogenizer that discharges the treatment liquid from a homogenization valve can be used. As the nozzle-type high-pressure homogenizer, "Genus PY" manufactured by Genus, "Star Burst" manufactured by Sugino Machine), and Nanomizer" manufactured by Nanomizer, etc., can be used. As the valve-type high-pressure homogenizer, "HC3 Series" manufactured by Sanmaru Machinery Industry, "HV-H Series" manufactured by Izumi Food Machinery, "R-Model" manufactured by SPX Flow, etc., can be used. However, the invention is not limited thereto. Among the above, the valve-type high-pressure homogenizer can increase the flow rate of the treatment liquid, and in the case of producing a carbon nanotube dispersion composition by circulation dispersion, homogeneity is improved, the cumulative particle size D₉₀ of the carbon nanotube dispersion composition becomes smaller, filtration properties are improved, and in the filtration process, a filter with excellent filtration accuracy can be used, thus making it easier to obtain a carbon nanotube dispersion composition with a lower content of metal foreign particles.

In the carbon nanotube dispersion composition of the embodiment, it is preferable to perform dispersion, by circulation dispersion or pass dispersion, until substantially no unpulverized carbon nanotubes remain. In the case of circulation dispersion, if the holding tank is uniformly stirred, it is preferable to perform 5 passes, more preferably 10 passes, and even more preferably 15 passes or more, to reduce the probability of unpulverized particles to 1 mass% or less. In the case of pass dispersion, it is preferable to perform dispersion for 3 passes or more, more preferably 5 passes or more, and even more preferably 10 passes or more. If unbroken carbon nanotubes are present, the cumulative particle size D₉₀ tends to increase, and there is a risk that the filtration properties of the carbon nanotube dispersion composition may deteriorate.

In the carbon nanotube dispersion composition of the embodiment, in order to reduce the content of metal foreign particles to 1.0 mg or less as determined by Condition 1, it is preferable to perform the pulverization process on the carbon nanotubes and then remove the metal foreign particles by using a filter or magnetic force.

### [Process for removing metal foreign particles]

The method for removing metal foreign particles is not particularly limited, but examples may include a filtration process using a filter, and a magnetic separation process such as magnetic separation process using an electromagnet.

It is preferable to include the filtration process and the magnetic separation process, as the magnetic separation process can remove metal foreign particles in carbon nanotubes grown with the metal catalyst as nuclei, and the filtration process can recover metal foreign particles that cannot be removed by the magnet.

Moreover, it is more preferable to perform the magnetic separation process after the filtration process. By conducting the filtration process as the final step before shipping the CNT dispersion composition, metal foreign particles from piping and other sources can also be removed. By doing so, the metal foreign particles can be reduced, thus resulting in superior properties when used in batteries.

### (Magnetic separation process)

As the method for removing metal foreign particles by using magnetic force through the magnetic separation process, various methods in the conventional art can be used. For example, a preferred method is to set up an electromagnet during the manufacturing process of the carbon nanotube dispersion composition and pass the carbon nanotube dispersion composition through the electromagnet to remove metal foreign particles.

The magnetic flux density of the electromagnet is preferably 5000 gauss or more and 20000 gauss or less, and more preferably 10000 gauss or more and 20000 gauss or less. By using an electromagnet within the range, not only metal foreign particles contained in the carbon nanotubes but also metal foreign particles that have been introduced during the manufacturing process of the carbon nanotube dispersion composition can be removed.

Specifically, for example, CS-150HHH, CS-250HHH, CS-300HHH manufactured by Nippon Magnetics, Inc., DVF-50-6, DVF-50-9, DVF-50-12 manufactured by Nippon Eriez Magnetics Co., Ltd., and EMF-100S, EMF-150S, EMF-250S, EMF-300S manufactured by Taiho Magnetic Co., Ltd., can be used.

The flow rate of the carbon nanotube dispersion composition when it comes into contact with the electromagnet is preferably 1 L/min or more and 200 L/min or less, and more preferably 30 L/min or more and 100 L/min or less. If the flow rate is too high when the carbon nanotube dispersion composition contacts the electromagnet, there is a possibility that metal magnetic foreign particles with low magnetic force, which have been captured by the electromagnet, may flow back into the carbon nanotube dispersion composition.

The number of times the carbon nanotube dispersion composition passes through the electromagnet is preferably 3 times or more. If the number of times of passing is too low, there is a possibility that metal foreign particles cannot be removed. In the case of passing through the electromagnet in a circulation system, it is preferable to pass through a greater number of times, considering the uniformity in the tank used in the manufacturing process.

### (Filtration process)

As the filter for separating metal foreign particles, either a surface filter such as a membrane filter or a depth filter may be used, but a depth filter is more preferable. Since many metal foreign particles are not spherical and have orientation, using a depth filter allows for efficient removal of metal foreign particles from the carbon nanotube dispersion composition.

Unlike surface filters (filters that mainly capture particulate matters in a fluid on the filter surface), depth filters are filters that mainly capture particulate matters in a fluid within the filter medium, and exhibit high particle retention performance and are less prone to clogging. By using a depth filter, metal foreign particles in the carbon nanotube dispersion composition can be removed more selectively.

As depth filters, for example, 3M(TM) PP non-woven depth cartridge NT-T series, Profile II manufactured by Nippon Pall Corporation, and PP depth filter cartridge Cilia Clean manufactured by Roki Co., Ltd. can be used.

The filtration accuracy of the filter is preferably 3 µm or more and 50 µm or less, more preferably 5 µm or more and 50 µm or less, and particularly preferably 10 µm or more and 40 µm or less. In the case where a filter with a small pore size is used to increase the removal efficiency of metal foreign particles in the carbon nanotube dispersion composition, there is a possibility that the removal efficiency of metal foreign particles may decrease due to clogging of carbon nanotubes. By using a filter with filtration accuracy in the range, metal foreign matters can be efficiently removed, and a carbon nanotube dispersion composition with fewer metal foreign particles can be obtained.

Even if a filtration process is performed by using a filter with filtration accuracy of 3 µm or 5 µm, metal foreign particles may have orientation due to the needle-like shape, and it may not be possible to completely remove the metal foreign particles, resulting in residual presence in the carbon nanotube dispersion composition. Therefore, it is preferable to appropriately control the composition or viscosity of the carbon nanotube dispersion composition, the dispersion process, or the method of the metal foreign particle removal process, and reduce the content of metal foreign particles as determined by Condition 1.

### <<Evaluation method of carbon nanotube dispersion composition>>

The evaluation method for the carbon nanotube dispersion composition of the embodiment includes determining the content of metal foreign particles in the carbon nanotube dispersion composition containing the carbon nanotubes, the dispersant, and the solvent, according to Condition 2 as follows.

### <Condition 2>

After metal foreign particles in the carbon nanotube dispersion composition are recovered by using an electromagnet, and the metal foreign particles that are obtained through washing with a solvent are deposited on a filter. The weight of the metal foreign particles on the filter is then measured.

Condition 1 may be implemented as Condition 2. According to the evaluation method of the embodiment, the carbon nanotube dispersion composition can be evaluated based on criteria corresponding to the content of metal foreign particles contained in the composition.

### <<Composite slurry>>

The composite slurry of the embodiment includes at least a carbon nanotube dispersion composition and an active substance. In other words, the composite slurry includes at least carbon nanotubes, a dispersant, a solvent, and an active substance, and preferably includes a binder resin.

The binder resin is a resin used to bind substances. There is no particular limitation as the binder resin, but examples may include: polymers or copolymers containing as constituent units, such as fluorine resins, ethylene, propylene, vinyl chloride, vinyl acetate, vinyl alcohol, maleic acid, acrylic acid, acrylic acid ester, methacrylic acid, methacrylic acid ester, acrylonitrile, styrene, vinyl butyral, vinyl acetal, vinylpyrrolidone, etc.; polyurethane resin, polyester resin, phenol resin, epoxy resin, phenoxy resin, urea resin, melamine resin, alkyd resin, acrylic resin, formaldehyde resin, silicone resin, fluorine resin; cellulose resins such as carboxymethyl cellulose; rubber materials such as styrene-butadiene rubber; conductive resins such as polyaniline, polyacetylene, etc. Among the above, it is preferable to use a fluorine resin as the binder resin from the viewpoint of electrochemical oxidation-reduction resistance.

The composite slurry may include a resin-type dispersant that also functions as a binder resin.

As the fluorine resin, for example, polyvinylidene fluoride, polyvinyl fluoride, and tetrafluoroethylene are preferable.

The weight average molecular weight of the fluorine resin is preferably 10,000 or more and 2,000,000 or less, more preferably 100,000 or more and 1,500,000 or less, and particularly preferably 200,000 or more and 1,500,000 or less. The weight average molecular weight is the weight average molecular weight in polystyrene equivalent, which can be measured by gel permeation chromatography (GPC).

The active substance is a material that serves as the basis for the battery reaction. The active substance can be divided into a positive electrode active substance and a negative electrode active substances based on the electromotive force. In the specification, the positive electrode active substance and the negative electrode active substance may be simply referred to as "active substance". The active substance is a material that serves as the basis for the battery reaction. The active substance can be divided into a positive electrode active substance and a negative electrode active substance based on the electromotive force.

As for the positive electrode active substance, although not particularly limited, metal compounds such as metal oxides and metal sulfides capable of doping or intercalating lithium ions, and conductive polymers can be used. Examples may include inorganic compounds such as oxides of transition metals like Fe, Co, Ni, Mn, composite oxides with lithium, and transition metal sulfides. Specifically, examples may include transition metal oxide powders such as MnO, V₂O₅, V₆O₁₃, TiO₂, composite oxide powders of lithium and transition metals in a layered structure such as lithium nickelate, lithium cobaltate, lithium manganate, lithium and transition metals in a spinel structure such as lithium manganate, lithium iron phosphate materials which are phosphate compounds in an olivine structure, transition metal sulfide powders such as TiS₂, FeS. In addition, conductive polymers such as polyaniline, polyacetylene, polypyrrole, and polythiophene can also be used. Furthermore, a mixture of the inorganic compounds and organic compounds may be used.

The positive electrode active substance is preferably a composite oxide with lithium, including transition metals such as Al, Fe, Co, Ni, Mn, more preferably a composite oxide with lithium, including any of Al, Co, Ni, Mn, and particularly preferably a composite oxide with lithium including Ni and/or Mn. When such active substances are used, a particularly favorable effect for battery properties can be obtained.

As for the negative electrode active substance, there is no particular limitation as long as the material is capable of doping or intercalating lithium ions. Examples may include metal Li, alloys such as tin alloys, silicon alloys, lead alloys, metal oxides such as LixFe₂O₃, LixFe₃O₄, Li_{X}WO₂ (where x is a number satisfying 0<x<1), lithium titanate, lithium vanadate, lithium silicate, conductive polymers such as polyacetylene, poly-p-phenylene, carbon-based materials such as amorphous carbon materials like soft carbon and hard carbon, artificial graphite such as highly graphitized carbon materials, or natural graphite and other carbonaceous powders, carbon black, mesophase carbon black, resin-baked carbon materials, vapor-grown carbon fibers, and carbon fibers. The negative electrode active substances can be used alone or in combination of two or more.

The BET specific surface area of the active substance is preferably 0.1 m²/g or more and 10 m²/g or less, more preferably 0.2 m²/g or more and 5 m²/g or less, and even more preferably 0.3 m²/g or more and 3 m²/g or less.

The average particle size of the active substance is preferably in the range of 0.05 µm to 100 µm, and more preferably in the range of 0.1 µm to 50 µm. The average particle size of the active substance referred to in the specification is the average of the particle sizes measured by electron microscopy.

To obtain the composite slurry of the embodiment, it is preferable to perform a dispersion process after adding the active substance to the carbon nanotube dispersion composition. The dispersion device used to perform such process is not particularly limited. The composite slurry can be obtained by using the dispersion device described for the carbon nanotube dispersion composition.

The content ratio of the active substance in the composite slurry is preferably 20 mass% to 85 mass%, and particularly preferably 40 mass% to 85 mass%, based on 100 mass% of the composite slurry.

The content of carbon nanotubes in the composite slurry is preferably 0.05 parts by mass to 10 parts by mass, preferably 0.1 parts by mass to 5 parts by mass, and preferably 0.1 parts by mass to 3 parts by mass, based on 100 parts by mass of the active substance.

The content of the dispersant in the composite slurry is preferably 5 parts by mass or more and 200 parts by mass or less, more preferably 10 parts by mass or more and 100 parts by mass or less, and even more preferably 20 parts by mass or more and 50 parts by mass or less, with respect to 100 parts by mass of carbon nanotubes.

In the case where the composite slurry contains a binder resin, the content of the binder resin in the composite slurry is preferably 0.5 parts by mass to 20 parts by mass, more preferably 1 part by mass to 10 parts by mass, and particularly preferably 1 part by mass to 5 parts by mass, based on 100 parts by mass of the active substance.

The solid content concentration of the composite slurry is preferably 30 mass% to 90 mass%, and preferably 40 mass% to 85 mass%, based on 100 mass% of the composite slurry.

In the case where the solvent includes an amide-based polar solvent, the water content in the composite slurry is preferably 500 ppm or less, more preferably 300 ppm or less, and particularly preferably 100 ppm or less.

### <<Electrode, electrode film>>

The electrode of the embodiment includes a current collector and an electrode film formed from the composite slurry. The electrode film is a coating film of the composite slurry. For example, the electrode film is a coating film forming an electrode composite layer by coating and drying the composite slurry on the current collector.

The material and the shape of the current collector are not particularly limited, and can be appropriately selected to suit various types of secondary batteries. For example, the materials for the current collector include metals or alloys such as aluminum, copper, nickel, titanium, or stainless steel. As for the shape, although a foil on a flat plate is generally used, a material with a roughened surface, a a material with a perforated foil, or a mesh-type current collector can also be used.

There is no particular restriction on the method for coating the composite slurry on the current collector and forming the electrode film, and conventional methods can be used. Specifically, examples can include methods such as die coating, dip coating, roll coating, doctor coating, knife coating, spray coating, gravure coating, screen printing, or electrostatic coating. As for the drying method, natural drying, forced air drying, hot air drying, infrared heating, far-infrared heating, and others can be used. However, the invention is not limited thereto.

In addition, after coating, a rolling process using a flat press or a calendar roll may be performed. The thickness of the electrode film (electrode composite layer) is generally 1 µm or more and 500 µm or less, and preferably 10 µm or more and 300 µm or less.

### <<Secondary battery>>

The secondary battery of the embodiment includes an electrode having the electrode film and an electrolyte. The secondary battery includes a positive electrode and a negative electrode, and at least one of the positive electrode and the negative electrode may have the electrode film of the embodiment. The carbon nanotube dispersion composition of the embodiment forms a good conductive network in the electrode of the secondary battery, thus excelling in rate properties. During charge and discharge, the active substance is uniformly utilized, making it difficult for the active substance to deteriorate. Furthermore, overcharging and over-discharging during charge and discharge are suppressed. Additionally, due to the low content of the metal foreign particles derived from the carbon nanotube dispersion composition, degradation of battery properties caused by electrolyte decomposition or metal deposition is less likely to occur, and high-temperature cycle properties are excellent.

As the positive electrode, an electrode film prepared by coating and drying the composite slurry containing the positive electrode active substance on the current collector can be used.

As the negative electrode, an electrode film prepared by coating and drying the composite slurry containing the negative electrode active substance on the current collector can be used.

As the electrolyte, various conventional materials that allow ion movement can be used. For istance, examples may include those containing lithium salts such as LiBF₄, LiClO₄, LiPF₆, LiAsF₆, LiSbF₆, LiCF₃SO₃, Li(CF₃SO₂)₂N, LiC₄F₉SO₃, Li(CF₃SO₂)₃C, LiI, LiBr, LiCl, LiAlCl, LiHF₂, LiSCN, or LiBPh₄ (where Ph is a phenyl group), but the invention is not limited thereto. Those containing sodium salts can also be used. It is preferable to use the electrolyte dissolved in a non-aqueous solvent as an electrolyte solution.

As the non-aqueous solvent, although not particularly limited, examples may include: carbonates such as ethylene carbonate, propylene carbonate, butylene carbonate, dimethyl carbonate, ethyl methyl carbonate, and diethyl carbonate; lactones such as γ-butyrolactone, γ-valerolactone, and γ-octanoic lactone; glymes such as tetrahydrofuran, 2-methyltetrahydrofuran, 1,3-dioxolane, 4-methyl-1,3-dioxolane, 1,2-methoxyethane, 1,2-ethoxyethane, and 1,2-dibutoxyethane; esters such as methyl formate, methyl acetate, and methyl propionate; sulfoxides such as dimethyl sulfoxide and sulfolane; and nitriles such as acetonitrile. Such solvents may be used alone or in a mixture of two or more types.

In the secondary battery of the embodiment, it is preferable to include a separator. As the separator, examples may include polyethylene nonwoven fabric, polypropylene nonwoven fabric, polyamide nonwoven fabric, and those subjected to a hydrophilic process. However, the invention is not limited thereto.

The structure of the secondary battery of the embodiment is not particularly limited, but the battery is typically formed by a positive electrode and a negative electrode, and a separator provided as necessary, and can be formed in various shapes such as a paper type, a cylindrical type, a button type, a laminate type, etc., depending on the purpose of use.

The applications of the secondary battery of the embodiment are not particularly limited. Specifically, it can be used for power sources of consumer devices such as mobile phones, laptop computers, digital cameras, etc.; emergency power sources for hospitals, factories, buildings, etc.; vehicles such as hybrid vehicles, plug-in hybrid vehicles, electric vehicles, power-assisted bicycles, railway vehicles, etc. The secondary battery is, for example, one that recovers regenerative energy from the power of a vehicle.

Among these, since it is a secondary battery with high charge-discharge performance and excellent cycle properties, it can be suitably used for vehicles, resulting in vehicles with high safety and expected improved fuel efficiency. Furthermore, it can demonstrate excellent effects even in vehicle applications where high-current charge and discharge are desired.

The mounting position of the secondary battery in the vehicle of the embodiment is not particularly limited. For example, in the case of mounting the secondary battery in an automobile, the secondary battery can be mounted in the engine room of the vehicle, at the rear of the vehicle body, or under the seats of the vehicle body.

The invention includes embodiments as follows, for example. However, the embodiments of the invention are not limited to the following.
[1] A carbon nanotube dispersion composition includes carbon nanotubes, a dispersant, and a solvent. The content of metal foreign particles determined by Condition 1 as follows is 1.0 mg or less.
   <Condition 1>
   After the metal foreign particles in 20 kg of the carbon nanotube dispersion composition are recovered by using an electromagnet, which is equipped with 31 grid screens having a magnetic flux density of 16000 gauss, a spatial volume of 1.7 L, a diameter of 10 cm and a thickness of 1.3 cm, the metal foreign particles that are obtained through washing with the solvent are deposited on a filter with a disk diameter of 47 mm and an opening of 5 µm, and a weight of the metal foreign particles on the filter is then measured.
[2] In the carbon nanotube dispersion composition according to [1], the dispersant includes at least one selected from the group consisting of carboxymethyl cellulose, polyacrylic acid, and an acrylonitrile-based polymer.
[3] In the carbon nanotube dispersion composition according to [1] or [2], the dispersant includes a copolymer, and the copolymer has an alkylene structural unit with a content ratio of 50 mass% or more and 75 mass% or less, and a nitrile group-containing structural unit with a content ratio of 25 mass% or more and 50 mass% or less.
[4] In the carbon nanotube dispersion composition according to any one of [1] to [3], the solvent includes an amide-based polar solvent.
[5] In the carbon nanotube dispersion composition according to any one of [1] to [4], the solvent includes water.
[5] A carbon nanotube dispersion composition includes: carbon nanotubes; a copolymer; and an amide-based polar solvent.
   The content of metal foreign particles determined according to Condition 1 as follows is 1.0 mg or less.
   The copolymer includes an alkylene structural unit with a content ratio of 50 mass% or more and 75 mass% or less, and a nitrile group-containing structural unit with a content ratio of 25 mass% or more and 50 mass% or less.
      <Condition 1>
      Metal foreign particles in 20 kg of the carbon nanotube dispersion composition are recovered by using an electromagnet (magnetic flux density of 16000 gauss, spatial volume of 1.7 L, equipped with 31 grid screens with a diameter of 10 cm and a thickness of 1.3 cm), washed with the amide-based polar solvent, and the obtained metal foreign particles are deposited on a filter with a disk diameter of 47 mm and an opening of 5 µm. The weight of the metal foreign particles on the filter is then measured.
[7] A carbon nanotube dispersion composition includes carbon nanotubes, a dispersant, and water. The content of metal foreign particles determined by Condition 1 as follows is 1.0 mg or less.
   <Condition 1>
   After metal foreign particles in 20 kg of the carbon nanotube dispersion composition are recovered by using an electromagnet (magnetic flux density of 16000 gauss, spatial volume of 1.7 L, equipped with 31 grid screens with a diameter of 10 cm and a thickness of 1.3 cm), the metal foreign particles that are washed with a solvent and thus obtained are deposited on a filter with a disk diameter of 47 mm and an opening of 5 µm. The weight of the metal foreign particles on the filter is then measured.
[8] In the carbon nanotube dispersion composition according to any one of [1] to [7], the total content of iron, cobalt, nickel, chromium, molybdenum, and copper is 100 ppm or less.
[9] In the carbon nanotube dispersion composition according to any one of [1] to [8], the repose angle of the carbon nanotubes is 40° or more.
[10] In the carbon nanotube dispersion composition according to any one of [1] to [9], the cumulative particle size D₉₀ measured by the laser diffraction method is 6.0 µm or less.
[11] In the carbon nanotube dispersion composition according to any one of [1] to [10], the cumulative particle size D₉₀ measured by the laser diffraction method is 6.0 µm or less.
[12] In the carbon nanotube dispersion composition according to any one of [1] to [11], the viscosity at 25°C measured by a B-type viscometer is less than 2,000 mPa·s.
[13] In the carbon nanotube dispersion composition according to any one of [1] to [12], the carbon nanotubes have a BET specific surface area of 150 m²/g to 1200 m²/g.
[14] In the carbon nanotube dispersion composition according to any one of [1] to [13], the carbon nanotubes have a G/D ratio of 5 to 100, where G is the maximum peak intensity in the range of 1560 cm⁻¹ to 1600 cm⁻¹ and D is the maximum peak intensity in the range of 1310 cm⁻¹ to 1350 cm⁻¹ in the Raman spectrum.
[15] A composite slurry includes the carbon nanotube dispersion composition according to any one of [1] to [14]; and an active substance.
[16] An electrode film is formed from the composite slurry according to [15].
[17] A secondary battery includes a positive electrode and a negative electrode. At least one of the positive electrode and the negative electrode includes the electrode film according to [16].
[18] A vehicle includes the secondary battery according to [17].
[19] A method for manufacturing the carbon nanotube dispersion composition according to any one of [1] to [14]. The method includes all of Steps (1) to (3) as follows:
   [Step (1): Pulverization step]
      a step of applying a shear force to the carbon nanotubes to pulverize the carbon nanotubes;
   [Step (2): Magnetic separation step]
      a step of removing the metal foreign particles by using an electromagnet with a magnetic flux density of 10000 gauss or more and 20000 gauss or less; and
   [Step (3): Filtration step]
      a step of performing filtration using a depth filter with a filtration accuracy of 5 µm or more and 50 µm or less.

The disclosure of the present application is related to the subject matter described in Japanese Patent Application No. 2023-184181 filed on October 26, 2023, and Japanese Patent Application No. 2024-109392 filed on July 8, 2024, the entire contents of which are incorporated herein by reference.

### Examples

The invention will be described more specifically below with reference to examples. The invention is not limited to the following examples as long as the invention does not exceed the gist thereof. Unless otherwise specified, "parts" refers to "parts by mass" and "%" refers to "mass%". In addition, the mixture amounts in the tables are in parts by mass, and except for solvents, the amounts are values converted from non-volatile contents. Blank spaces in the tables indicate that the component is not included in the mixture.

The materials used in the examples and comparative examples are shown below.
- Hydrogenated nitrile butadiene rubber (manufactured by Zannan Scitech, ZN35052, Mooney viscosity: 20, weight average molecular weight: 110,000, alkylene structural unit: 66 mass%, content of nitrile group-containing structural unit: 34 mass%), hereinafter referred to as dispersant (A).
- Hydrogenated nitrile butadiene rubber (manufactured by Zannan Scitech, ZN35053, Mooney viscosity: 35, weight average molecular weight: 130,000, alkylene structural unit: 64 mass%, content of nitrile group-containing structural unit: 36 mass%), hereinafter referred to as dispersant (B).
- Hydrogenated nitrile butadiene rubber (manufactured by Zannan Scitech, ZN28255, Mooney viscosity: 50, weight average molecular weight: 190,000, alkylene structural unit: 72 mass%, content of nitrile group-containing structural unit: 28 mass%), hereinafter referred to as dispersant (C).
- Hydrogenated nitrile butadiene rubber (manufactured by Zannan Scitech, ZN35056, Mooney viscosity: 65, weight average molecular weight: 180,000, alkylene structural unit: 64 mass%, content of nitrile group-containing structural unit: 36 mass%), hereinafter referred to as dispersant (D).
- Hydrogenated nitrile butadiene rubber (manufactured by Zannan Scitech, ZN35058, Mooney viscosity: 85, weight average molecular weight: 220,000, alkylene structural unit: 64 mass%, content of nitrile group-containing structural unit: 36 mass%), hereinafter referred to as dispersant (E).
- Hydrogenated nitrile butadiene rubber (manufactured by ARLANXEO, Therban(R)3406, Mooney viscosity: 63, weight average molecular weight: 200,000, alkylene structural unit: 66 mass%, content of nitrile group-containing structural unit: 34 mass%), hereinafter referred to as dispersant (F).
- Hydrogenated nitrile butadiene rubber (manufactured by Zannan Scitech, liquid hydrogenated nitrile butadiene rubber, weight average molecular weight: 30,000, alkylene structural unit: 66 mass%, content of nitrile group-containing structural unit: 34 mass%), hereinafter referred to as dispersant (G).
- Polyvinylpyrrolidone (PVP) (manufactured by Nippon Shokubai Co., Ltd., K-30, weight average molecular weight 40,000) hereinafter referred to as Dispersant (H).
- Polyacrylic acid (manufactured by Toagosei, AC-10LP, weight average molecular weight: 50,000), hereinafter referred to as dispersant (I).
- Sodium carboxymethyl cellulose (manufactured by Nippon Paper Industries, Sunrose A, APP-84, weight average molecular weight: 18,000, degree of etherification: 0.71), hereinafter referred to as dispersant (J).
- Carbon nanotubes (manufactured by JEIO, JENOTUBE10B), hereinafter referred to as carbon nanotube (CNT) (A1).
- Carbon nanotubes (manufactured by JEIO, JENOTUBE6A), hereinafter referred to as carbon nanotube (CNT) (B1).
- Purified CNT described in paragraph 0098 of Japanese Patent No. 6586197, used as carbon nanotube (CNT) (I1).
- FT2020 (manufactured by Cnano), hereinafter referred to as carbon nanotube (CNT) (J1).
- TUBALL 01RW03 (manufactured by OCSiAl), hereinafter referred to as carbon nanotube (CNT) (K1).

### <Preparation of carbon nanotubes (C1)>

1 kg of carbon nanotubes (A1) were weighed and added to a glass container of 100 L, and 50 kg of 20% hydrochloric acid (manufactured by FUJIFILM Wako Pure Chemical Corporation) was added. The mixture was then thoroughly stirred using an agitator under the condition of 25°C. Subsequently, the mixture was sufficiently diluted with ion-exchanged water and vacuum filtered with a membrane filter. After repeating the dilution and filtration processes, the carbon nanotubes were transferred to a PTFE tray and dried at 80°C by using an oven to obtain carbon nanotubes (C1).

### <Preparation of carbon nanotubes (C2)>

The carbon nanotubes (C1) were processed by using a dynamic mill (manufactured by Nippon Coke & Engineering Co., Ltd.) with zirconia beads with a diameter of 8 mm as the grinding media. The material was fed at an operating condition of 10.0 kg/h and processed at a peripheral speed of 5.0 m/s to obtain carbon nanotubes (C2).

### <Preparation of carbon nanotubes (D1)>

10 kg of carbon nanotubes (A1) were weighed and added to a heat-resistant container of 120 L. The heat-resistant container containing the carbon nanotubes was placed in a furnace. Subsequently, nitrogen gas was introduced into the furnace, a positive pressure was maintained while the air inside the furnace was discharged. After the oxygen concentration in the furnace became 0.1% or less, the temperature was raised to 1600°C over a period of 30 hours. While the furnace temperature was maintained at 1600°C, a chlorine gas was introduced at a rate of 50 L/min for 50 hours. Thereafter, a nitrogen gas was introduced at 50 L/min, and cooling was performed while the positive pressure was maintained to obtain the carbon nanotubes (D1).

### <Preparation of carbon nanotubes (E1)>

10 kg of carbon nanotubes (A1) were weighed and added to a heat-resistant container of 120 L. The heat-resistant container containing the carbon nanotubes was placed in a furnace. Subsequently, nitrogen gas was introduced into the furnace, a positive pressure was maintained while the air inside the furnace was discharged. After the oxygen concentration in the furnace became 0.1% or less, the temperature was heated to 1800°C over a period of 30 hours. While the furnace temperature was maintained at 1800°C, a chlorine gas was introduced at a rate of 50 L/min for 50 hours. Thereafter, a nitrogen gas was introduced at 50 L/min, and cooling was performed while the positive pressure was maintained to obtain the carbon nanotubes (E1).

### <Preparation of carbon nanotubes (E2)>

Carbon nanotubes (E1) were passed through an electromagnet (electromagnetic separator CG-150HHH manufactured by Nippon Magnetics Co., Ltd.) three times to remove a magnetic foreign matter from the carbon nanotubes (E1), thereby obtaining the carbon nanotubes (E2). The electromagnetic separator used had a screen opening of 10 mm.

### <Preparation of carbon nanotubes (E3)>

Carbon nanotubes (E1) were processed by using a dynamic mill (manufactured by Nippon Coke & Engineering Co., Ltd.) with zirconia beads with a diameter of 8 mm as the grinding media. The material was fed at an operating condition of 10.0 kg/h and processed at a peripheral speed of 5.0 m/s. Then, the carbon nanotubes were passed through an electromagnet (electromagnetic separator CG-150HHH manufactured by Nippon Magnetics Co., Ltd.) three times to remove a magnetic foreign matter from the raw material, and the carbon nanotubes (E3) were obtained. The electromagnetic separator used had a screen opening of 10 mm.

### <Preparation of carbon nanotubes (F1)>

10 kg of carbon nanotubes (A1) were weighed and added to a heat-resistant container of 120 L. The heat-resistant container containing the carbon nanotubes was placed in a furnace. Subsequently, nitrogen gas was introduced into the furnace, a positive pressure was maintained while the air inside the furnace was discharged. After the oxygen concentration in the furnace became 0.1% or less, the temperature was raised to 2000°C. While the furnace temperature was maintained at 2000°C, a chlorine gas was introduced at a rate of 50 L/min for 50 hours. Thereafter, a nitrogen gas was introduced at 50 L/min, and cooling was performed while the positive pressure was maintained to obtain the carbon nanotubes (F1).

### <Preparation of carbon nanotubes (G1)>

10 kg of carbon nanotubes (A1) were weighed and added to a heat-resistant container of 120 L. The heat-resistant container containing the carbon nanotubes was placed in a furnace. Subsequently, nitrogen gas was introduced into the furnace, a positive pressure was maintained while the air inside the furnace was discharged. After the oxygen concentration in the furnace became 0.1% or less, the temperature was raised to 3000°C. While the furnace temperature was maintained at 3000°C, a chlorine gas was introduced at a rate of 50 L/min for 50 hours. Thereafter, a nitrogen gas was introduced at 50 L/min, and cooling was performed while the positive pressure was maintained to obtain the carbon nanotubes (G1).

### <Preparation of carbon nanotubes (H1)>

10 kg of carbon nanotubes (B1) were weighed and added to a heat-resistant container of 120 L. The heat-resistant container containing the carbon nanotubes was placed in a furnace. Subsequently, nitrogen gas was introduced into the furnace, a positive pressure was maintained while the air inside the furnace was discharged. After the oxygen concentration in the furnace became 0.1% or less, the temperature was raised to 1800°C. While the furnace temperature was maintained at 1800°C, a chlorine gas was introduced at a rate of 50 L/min for 50 hours.

Thereafter, a nitrogen gas was introduced at 50 L/min, and cooling was performed while the positive pressure was maintained. The carbon nanotubes were retrieved and processed by using a dynamic mill (manufactured by Nippon Coke & Engineering Co., Ltd.) with zirconia beads of 8 mm diameter as grinding media. The material was fed at an operating condition of 10.0 kg/h and processed at a peripheral speed of 5.0 m/s. Subsequently, the carbon nanotubes were passed through an electromagnet (electromagnetic separator CG-150HHH manufactured by Nippon Magnetics Co., Ltd.) three times to remove metal foreign particles from the raw material, thereby obtaining carbon nanotubes (H1). The electromagnetic separator used had a screen opening of 10 mm.

Table 1 shows the physical properties of the carbon nanotubes used in the examples and comparative examples.

### [Table 1]

**Table 1**

| CNT | Outer diameter (nm) | BET Specific surface area (m²/g) | G/D Ratio | Repose angle (°) | Carbon purity (%) |
|---|---|---|---|---|---|
| A1 | 10 | 220 | 0.8 | 50 | 98 |
| B1 | 6 | 700 | 0.8 | 50 | 98 |
| C1 | 10 | 210 | 0.8 | 42 | 99.5 |
| C2 | 10 | 250 | 0.8 | 55 | 99.5 |
| D1 | 10 | 180 | 1.6 | 47 | 99.8 |
| E1 | 10 | 170 | 2.2 | 45 | 99.9 |
| E2 | 10 | 170 | 2.2 | 45 | 99.9 |
| E3 | 10 | 220 | 2.2 | 52 | 99.9 |
| F1 | 10 | 180 | 2.2 | 43 | 99.9 |
| G1 | 10 | 100 | 7.5 | 38 | 99.9 |
| H1 | 6 | 500 | 2.5 | 52 | 99.9 |
| I1 | 13 | 150 | 2 | 38 | 99.7 |
| J1 | 6.2 | 750 | 45.5 | 50 | 99.7 |
| K1 | 4.4 | 980 | 41.7 | 45 | 99.5 |

### <Measurement of weight average molecular weight of dispersants>

The weight average molecular weights (Mw) of the dispersants were measured by using gel permeation chromatography (GPC) equipped with an RI detector. The conditions were as follows:

### (Measurement method for polyacrylonitrile-based polymer)

An HLC-8320GPC (manufactured by Tosoh Corporation) was used as the device, with three separation columns connected in series. The filling agents used were "TSK-GEL SUPER AW-4000", "AW-3000", and "AW-2500" manufactured by Tosoh Corporation, in this order, and the measurement was performed at an oven temperature of 40°C, by using a N,N-dimethylformamide solution containing 30 mM triethylamine and 10 mM LiBr as the eluent, with a flow rate of 0.6 mL/min. The measurement sample was adjusted to a concentration of 1% by using a solvent consisting of the eluent, and 20 microliters were injected. The weight average molecular weight is a polystyrene-equivalent value.

### (Measurement method for cellulose derivative)

An HLC-8320GPC (manufactured by Tosoh Corporation) was used as the device, with a "TSKgel SuperMultiporePW-M" column manufactured by Tosoh Corporation. The temperature was set at 25°C, and a 0.1M NaCl aqueous solution was used as the eluent, with a flow rate of 1.0 mL/min. The measurement sample was prepared as a 0.1 mass% aqueous solution, and 100 microliters were injected. The weight average molecular weight is expressed as a pullulan-equivalent value.

### (Measurement method for dispersants other than acrylonitrile-based polymers and cellulose derivatives)

The measurement method was selected and performed by using either Measurement Method 1 or Measurement Method 2, depending on the solubility of the dispersant in water. The dispersant was added to a mixture of purified water/methanol = 3/7 (volume ratio) to achieve 0.2 mass%, and subjected to ultrasonic irradiation for 10 minutes. In the case where the dispersant was completely dissolved, Measurement Method 1 was used for measurement. On the other hand, in the case where the dispersant did not completely dissolve and precipitation occurred or a suspended state was observed, Measurement Method 2 was used for measurement.

### (Measurement Method 1)

The device used was Shodex GPC-101 (manufactured by Resonac Corporation), with four separation columns connected in series: three "OHpak SB-806M HQ" columns and one "OHpak SB-802.5 HQ" column, both manufactured by Resonac Corporation, in that order. The oven temperature was set at 40°C, and a solution of purified water/methanol = 3/7 (volume ratio) containing 50mM lithium chloride was used as the eluent, with a flow rate of 1.0 mL/min. The sample was prepared at a concentration of 0.2 mass% in the mixed solution consisting of the eluent, and 0.1 mL was injected. The weight average molecular weight is expressed as a polyethylene glycol-equivalent value.

### (Measurement Method 2)

The device used was HLC-8320GPC (manufactured by Tosoh Corporation), with separation columns connected in series in the following order: "TSK-GELSUPER AW-4000", "AW-3000", and "AW-2500", all manufactured by Tosoh Corporation. The oven temperature was set at 40°C, and a N,N-dimethylformamide solution containing 30mM triethylamine and 10mM lithium bromide was used as the eluent, with a flow rate of 0.6 mL/min. The sample was prepared at a concentration of 0.2 mass% in the solvent consisting of the eluent, and 10 µL was injected. The weight average molecular weight is a polystyrene-equivalent value.

### <Preparation of standard positive electrode>

93 parts by mass of a positive electrode active substance (HED (registered trademark) NCM-111 1100 manufactured by BASF TODA Battery Materials LLC), 4 parts by mass of acetylene black (DENKA BLACK (registered trademark) HS100 manufactured by Denka Company Limited), and 3 parts by mass of polyvinylidene fluoride (PVDF), KUREHA KF POLYMER W#1300 manufactured by Kureha Battery Materials Japan Co., Ltd.) were added to a plastic container with a capacity of 150 cm³, and then mixed using a spatula until the powder became uniform. Subsequently, 20.5 parts by mass of N-methyl-2-pyrrolidone (NMP) was added, and the mixture was stirred for 30 seconds at 2000 rpm by using a rotation/revolution mixer (AWATORI RENTARO, ARE-310, manufactured by THINKY Corporation). After that, the mixture in the plastic container was mixed by using a spatula until the mixture became uniform, and then the mixture was stirred for 30 seconds at 2000 rpm by using the rotation/revolution mixer. Furthermore, 14.6 parts by mass of NMP was added, and the mixture was stirred for 30 seconds at 2000 rpm by using the rotation/revolution mixer. Finally, the mixture was stirred for 10 minutes at 3000 rpm by using a high-speed stirrer to obtain a positive electrode composite slurry. Subsequently, the composite slurry for the positive electrode was applied onto an aluminum foil with a thickness of 20 µm serving as a current collector by using an applicator, and then dried in an electric oven at 120°C ± 5°C for 25 minutes to adjust the basis weight amount per unit area of the electrode to 20 mg/cm². Furthermore, a rolling process was performed by using a roll press (3t hydraulic roll press manufactured by Sankumetal Co., Ltd.) to prepare a standard positive electrode with a composite layer density of 3.1 g/cm³.

### <Preparation of standard negative electrode>

0.5 parts by mass of acetylene black (DENKA BLACK (registered trademark), HS-100), 1 part by mass of MAC500LC (sodium carboxymethyl cellulose, Sunrose special type MAC500L, manufactured by Nippon Paper Industries Co., Ltd., non-volatile content 100%), and 98.4 parts by mass of water were added to a plastic container of 150 mL. Then, the mixture was stirred for 30 seconds at 2000 rpm by using a rotation/revolution mixer (AWATORI RENTARO, ARE-310, manufactured by THINKY Corporation). Furthermore, 92 parts by mass of artificial graphite (manufactured by Nippon Graphite Industries, Ltd., CGB-20) and 5 parts by mass of silicon (manufactured by Osaka Titanium Technologies Co., Ltd., SILICON MONOOXIDE SiO 1.3C 5µm, non-volatile content 100%) were added as active substances, and the mixture was stirred for 10 minutes at 3000 rpm by using a high-speed stirrer. Subsequently, 3.1 parts by mass of SBR (TRD2001, manufactured by JSR Corporation) were added, and the mixture was stirred for 30 seconds at 2000 rpm by using the rotation/revolution mixer to obtain a composite slurry for the negative electrode. Afterwards, the composite slurry for the negative electrode was coated onto a copper foil by using an applicator to achieve a weight per unit area of 8 mg/cm² for the electrode. The coated film was then dried in an electric oven at 120°C ± 5°C for 25 minutes. Furthermore, the coated film was subjected to a rolling process using a roll press (3t hydraulic roll press, manufactured by Sankumetal Co., Ltd.) to prepare a standard negative electrode with a composite layer having a density of 1.6 g/cm³.

### <Physical property measurement and evaluation method>

The physical property measurement and the evaluation method for the carbon nanotubes, the carbon nanotube dispersion composition, the electrode film, and the secondary battery used in the following examples and comparative examples are as follows.

### <Average outer diameter of carbon nanotubes>

Using an electronic balance (MSA225S100DI, manufactured by Sartorius), 0.2 g of carbon nanotubes were measured in a 450 mL SM sample bottle (manufactured by Sansho Co., Ltd.), 200 mL of toluene were added, and the mixture was dispersed by using an ultrasonic homogenizer (Advanced Digital Sonifer(R), MODEL 450DA, manufactured by BRANSON) at 30% amplitude for 5 minutes under ice cooling to prepare a carbon material dispersion composition. Subsequently, the carbon nanotube dispersion composition was appropriately diluted, and a few µL were dropped onto a collodion membrane and dried at room temperature. The sample was then observed by using a transmission electron microscope (H-7650, manufactured by Hitachi, Ltd.). The observation was performed at a magnification of 50,000 times, and multiple photographs containing more than 10 or more carbon nanotubes in the field of view were taken. The outer diameters of 300 randomly selected carbon nanotubes were measured, and the average thereof was defined as the average outer diameter (nm) of the carbon nanotubes. In the case where the carbon nanotubes formed bundle-like aggregates, observations were made at a magnification of one million times by using a transmission electron microscope (JEM2800, manufactured by JEOL Ltd.), and similar measurements were performed to determine the carbon nanotube outer diameter.

### <BET specific surface area of carbon nanotubes>

0.03 g of carbon nanotubes were weighed by using an electronic balance (MSA225S100DI manufactured by Sartorius) and then dried at 110°C for 15 minutes while degassing. Subsequently, the BET specific surface area of the carbon nanotubes was measured by using a fully automatic specific surface area measurement device (HM-model1208, manufactured by MOUNTECH).

### <G/D Ratio of carbon nanotubes>

The carbon nanotubes were placed in a Raman microscope (XploRA, manufactured by HORIBA, Ltd.) and measured using a laser wavelength of 532 nm. The measurement conditions were set as follows: acquisition time of 60 seconds, accumulation count of 2 times, attenuation filter of 10%, objective lens magnification of 20 times, confocal hole of 500, slit width of 100 µm, and measurement wavelength of 100 cm⁻¹ to 3000 cm⁻¹. The carbon nanotubes for measurement were dispensed onto a slide glass and planarized by using a spatula. Among the obtained peaks, the maximum peak intensity within the range of 1560 cm⁻¹ to 1600 cm⁻¹ in the spectrum was designated as G, and the maximum peak intensity within the range of 1310 cm⁻¹ to 1350 cm⁻¹ was designated as D. The ratio of G/D was defined as the G/D ratio of the carbon nanotubes.

### <Repose angle of carbon nanotubes>

The repose angle of the carbon nanotubes was measured by using a bulk density measurement device (JIS bulk specific gravity measuring device, manufactured by Tsutsui Scientific Instruments Co., Ltd.). First, the mass of the receiver was measured, and then the bulk density measurement device was leveled, and a funnel was attached to the funnel stand. A sieve was placed on the funnel, and a receiver was placed on the receiver stand. Subsequently, carbon nanotubes were placed on the sieve by using a spatula, and the carbon nanotubes were lightly brushed evenly over the entire surface of the sieve. The sample that passed through the sieve was collected in the receiver. The process was repeated until the carbon nanotubes formed a mound in the receiver. The angle formed between the conical heap of powder at the time of forming a mound and the horizontal plane was measured by using a protractor, and the angle was determined as the repose angle of the carbon nanotubes. In the case where it is difficult to sieve the carbon nanotubes, the repose angle was measured by using the same method without placing the sieve on the funnel.

### <Carbon purity of carbon nanotubes>

The carbon nanotubes were acid-decomposed by using a microwave sample pretreatment device (ETHOS1, manufactured by Milestone General) to extract the metals contained in the carbon nanotubes. Subsequently, an analysis was performed by using a multi-type ICP emission spectroscopy analyzer (720-ES, manufactured by Agilent) to calculate the amount of metals (sum of iron, cobalt, nickel, copper, and molybdenum) contained in the extract. The carbon purity of the carbon nanotubes was calculated as follows: Carbon purity of carbon nanotubes (%) = ((mass of carbon nanotubes - amount of metals) ÷ mass of carbon nanotubes) × 100

### <Content of metal foreign particles in carbon nanotube dispersion composition>

20 kg of carbon nanotube dispersion composition was passed through an electromagnet (manufactured by Taiho Magnetic Co., Ltd., EMF-100S, magnetic flux density: 16000 gauss, spatial volume: 1.7 L, equipped with 31 grid screens with a diameter of 10 cm and thickness of 1.3 cm) 5 times via a hose pump at a flow rate of 30 L/min. Subsequently, the solvent used in preparing the carbon nanotube dispersion composition and contained in the carbon nanotube dispersion composition was passed through the electromagnet (manufactured by Taiho Magnetic Co., Ltd., EMF-100S, magnetic flux density: 16000 gauss, spatial volume: 1.7 L, equipped with 31 grid screens with a diameter of 10 cm and thickness of 1.3 cm), and the carbon nanotube dispersion composition in the hose pump and the electromagnet was pushed and washed until substantially no solid content remained. Furthermore, after turning off the power of the electromagnet and confirming that the filter had lost its magnetic force, 10 kg of the solvent used in preparing the carbon nanotube dispersion composition and contained in the carbon nanotube dispersion composition was passed through the electromagnet at a flow rate of 30 L/min to obtain 10 kg of solvent containing metal foreign particles. Then, 10 kg of the solvent containing metal foreign particles was dispersed by performing an ultrasonic process by using an ultrasonic processor (ultrasonic cleaner manufactured by Aiwa Medical Industry Co., Ltd.) under the conditions of an output of 300 W and a frequency of 28 kHz for 2 minutes. After that, by using a filtration funnel, the entire amount was passed through a filter (weight (W1), material: polyester, disk diameter: 47 mm, opening: 5 µm), and then the metal foreign particles deposited on the filter were washed by using 100g of ethanol. Furthermore, the filter on which the metal foreign particles were deposited was removed, and the filter was dried at 60°C for 10 minutes by using a hot air oven, and a weight (W2) was measured. The content of the metal foreign particles in the carbon nanotube dispersion composition (weight of metal foreign particles) was calculated by subtracting the filter weight (W1) from the weight (W2) of the dried filter on which the metal foreign particles were deposited. The evaluation criteria for the weight of the metal foreign particles were set as follows: 0.1 mg or less: A, more than 0.1 mg to 0.4 mg or less: B, more than 0.4 mg to 1.0 mg or less: C, more than 1.0 mg: D.

### <Metal element content in carbon nanotube dispersion composition>

The carbon nanotube dispersion composition was dried using a hot air oven, then acid-decomposed by using a microwave sample pretreatment device (ETHOS1, manufactured by Milestone General) to extract metals contained in the carbon nanotubes. Subsequently, an analysis was performed by using a multi-type ICP emission spectroscopy analyzer (720-ES, manufactured by Agilent) to calculate the amount of metals (the total content of iron, cobalt, nickel, chromium, molybdenum, and copper) contained in the extract. The lower the metal element content, the more effectively a voltage defect in secondary batteries can be suppressed. The evaluation criteria for metal element content were set as follows: 30 ppm or less: ⊚ (excellent), more than 30 ppm and 50 ppm or less: ○ (good), more than 50 ppm and 100 ppm or less: △ (acceptable), more than 100 ppm: × (unacceptable).

### (Particle size of carbon nanotube dispersion composition)

The measurement of the cumulative particle size D₉₀ by the particle size distribution was conducted by using a laser diffraction/scattering particle size distribution analyzer (Partical LA-960V2, manufactured by HORIBA). The measurement device has a laser light wavelength of 650 nm and is provided with one 64-segment ring-shaped silicon photodiode detector, five 4-channel array detectors, and three silicon photodetectors. The measurement part uses a flow-type cell (sample cell) made of synthetic quartz. First, the solvent same as that contained in the carbon nanotube dispersion composition was introduced into the sample bath including the sample cell, and circulation/ultrasonic cleaning was performed. The operation mode was set as follows: circulation speed: 3, ultrasonic intensity: 7, ultrasonic time: 1 minute, stirring speed: 7, stirring mode: continuous. Subsequently, to remove air bubbles, ultrasonic operation was performed at an ultrasonic intensity of 7 for 5 seconds. Then, a blank (background) measurement was carried out. The particle size standard was set to volume, and the particle refractive index was set to 1.920-0.522i (carbon nanotube). The solvent refractive index was set to the refractive index of the solvent used at the time of preparing the carbon nanotube dispersion composition (1.468 (NMP) or 1.333 (water)). The carbon nanotube dispersion composition was added dropwise to adjust the laser light transmittance to 60% ± 1% during measurement, and sample adjustment was performed. The operation mode during measurement was set as follows: circulation speed: 3, stirring speed: 7, stirring mode: continuous.

The evaluation criteria for cumulative particle size D₉₀ were set as follows: 4.0 µm or less: A, more than 4.0 µm to 6.0 µm or less: B, more than 6.0 µm to 10 µm or less: C, more than 10 µm: D.

### <Initial viscosity of carbon nanotube dispersion composition>

After placing the carbon nanotube dispersion composition in a constant temperature bath at 25°C for 1 hour or more, the viscosity of the carbon nanotube dispersion composition was immediately measured using by a B-type viscometer at a rotor rotation speed of 100 rpm. For the measurement, a No. 4 rotor was used.

The evaluation criteria for initial viscosity were set as follows: less than 500 mPa·s: ⊚ (excellent), 500 mPa·s or more and less than 1000 mPa·s: ○ (good), 1000 mPa·s or more and less than 2000 mPa·s: △ (acceptable), 2000 mPa·s or more: × (poor).

### <Conductivity>

Conductivity was evaluated based on the volume resistivity of the electrode film. The composite slurry was coated onto an aluminum foil by using an applicator to achieve a weight per unit area of 20 mg/cm² for the electrode. The coated film was then dried in an electric oven at 120°C ± 5°C for 25 minutes. Subsequently, the surface resistivity (Ω/□) of the dried coating was measured by using a resistivity meter (manufactured by Nitto Seiko Analytic: Lorester GP (MCP-T610), probe: AP2 probe (RMH333)). After measurement, the volume resistivity (Ω·cm) of the electrode film was determined by multiplying the measured value by the thickness of the electrode composite layer formed on the aluminum foil. The thickness of the electrode composite layer was calculated by measuring the average of three points in the electrode film by using a film thickness meter (DIGIMICRO MH-15M, manufactured by NIKON), subtracting the thickness of the aluminum foil from the average, and then setting the obtained value as the volume resistivity (Ω·cm) of the electrode film.

The evaluation criteria for the volume resistivity were as follows: less than 8 Ω·cm: ⊚ (excellent), 8 Ω·cm or more and less than 12 Ω·cm: ○ (good), 12 Ω·cm and less than 15 Ω·cm: △ (moderate), and 15 Ω·cm or more: (poor).

### <Peel strength (positive electrode film)>

Adhesion was evaluated based on the peel strength of the electrode film.

The composite slurry was coated onto an aluminum foil by using an applicator to achieve a weight per unit area of 20 mg/cm² for the electrode. The coated film was then dried in an electric oven at 120°C ± 5°C for 25 minutes. Subsequently, two rectangular shapes of 90 mm × 20 mm were cut by using the coating direction as the long axis. The peel strength was measured by using a tabletop tensile tester (Strograph E3, manufactured by Toyo Seiki Seisaku-sho, Ltd.) and evaluated by the 180-degree peel test method. Specifically, a double-sided tape (No. 5000NS, manufactured by Nitoms Inc.) in a size of 100 mm × 30 mm was attached to a stainless steel plate, and the prepared electrode composite layer was adhered to the other side of the double-sided tape. The electrode was then peeled off from the bottom to the top at a constant speed (50 mm/min), and the average value of the stress at this time was taken as the peel strength.

The evaluation criteria for peel strength were set as follows: 0.7 N/cm or more: ⊚ (excellent), 0.5 N/cm or more and less than 0.7 N/cm: ○ (good), 0.3 N/cm or more and less than 0.5 N/cm: △ (acceptable), less than 0.3 N/cm: × (poor).

### <Peel strength (negative electrode film)>

Adhesion was evaluated based on the peel strength of the electrode film.

The composite slurry was coated onto a copper foil by using an applicator to achieve a weight per unit area of 8 mg/cm² for the electrode. The coated film was then dried in an electric oven at 120°C ± 5°C for 25 minutes. Subsequently, two rectangular shapes of 90 mm × 20 mm were cut by using the coating direction as the long axis. The peel strength was measured by using a tabletop tensile tester (Strograph E3, manufactured by Toyo Seiki Seisaku-sho, Ltd.) and evaluated by the 180-degree peel test method. Specifically, a double-sided tape (No. 5000NS, manufactured by Nitoms Inc.) in a size of 100 mm × 30 mm was attached to a stainless steel plate, and
the prepared negative electrode film was adhered to the other side of the double-sided tape. The electrode was then peeled off from the bottom to the top at a constant speed (50 mm/min), and the average value of the stress at this time was taken as the peel strength.

The evaluation criteria for peel strength were set as follows: 0.5 N/cm or more: ⊚ (excellent), 0.3 N/cm or more and less than 0.5 N/cm: ○ (good), 0.1 N/cm or more and less than 0.3 N/cm: △ (acceptable), less than 0.1 N/cm: × (poor).

### <Evaluation on rate properties of lithium-ion secondary battery>

The laminate-type lithium-ion secondary battery was placed in a constant temperature room at 25°C, and charge-discharge measurements were performed by using a charge-discharge device (SM-8, manufactured by Hokuto Denko Corporation). After performing constant current constant voltage charging (cut-off current: 1.0 mA (0.02C)) with a charging current of 10 mA (0.2C) at a charge cut-off voltage of 4.2 V, constant-current discharging was performed with a discharge current of 10 mA (0.2C) at a discharge cut-off voltage of 2.5 V. The operation was repeated 3 times, and then constant-current constant-voltage charging (cut-off current (1.0 mA, 0.02C)) was performed with a charging current of 10 mA (0.2C) at a charge cut-off voltage of 4.2 V. Constant-current discharging was then performed with discharge currents of 0.2C and 3C until the discharge cut-off voltage of 2.5 V was reached, and the respective discharge capacities were determined. The rate properties can be expressed by the ratio between the discharge capacity of 0.2C and the discharge capacity of 3C, as shown in Formula 1 as follows. Rate properties = (discharge capacity of 3C / discharge capacity of 0.2C for the third time) × 100 (%)

The evaluation of rate properties was as follows: ⊚ (excellent) for a rate property of 80% or more, ○ (good) for a rate property of 70% or more and less than 80%, △ (acceptable) for a rate property of 60% or more and less than 70%, and × (poor) for a rate property of less than 60%.

### <Evaluation on high-temperature cycle properties of lithium-ion secondary battery>

The laminate-type lithium-ion secondary battery was placed in a constant temperature room at 45°C, and charge-discharge measurements were performed by using a charge-discharge device (SM-8, manufactured by Hokuto Denko Corporation). After performing constant-current constant-voltage charging (cut-off current: 1.25 mA (0.025C)) with a charging current of 50 mA (1C) at a charge cut-off voltage of 4.2 V, constant-current discharging was performed with a discharge current of 50 mA (1C) at a discharge cut-off voltage of 2.5 V. The operation was repeated 100 times. 1C was defined as the current value that discharges the theoretical capacity of the positive electrode in 1 hour. The high-temperature cycle properties can be expressed by the ratio between the discharge capacity of 1C at the 3^{rd} cycle and the discharge capacity of 1C at the 100^{th} cycle at 45°C, as shown in Formula 2 as follows. High-temperature cycle properties = (discharge capacity of 1C at the 100th cycle / discharge capacity of 1C at the3rd cycle) × 100 (%) For high-temperature cycle properties, the evaluation criteria were as follows: ⊚ (excellent) for a high-temperature cycle property of 90% or more, ○ (good) for a high-temperature cycle property of 85% or more and less than 90%, △ (acceptable) for a high-temperature cycle property of 80% or more and less than 85%, and × (poor) for a high-temperature cycle property of less than 80%.

### [Example A]

### (Example 1-1)

In a stainless steel container, 92 parts of N-methyl-2-pyrrolidone (NMP) and 8 parts of a dispersant (A) were added and stirred by using a disperser under the condition of 80°C. After completely dissolving the dispersant (A), the mixture was passed through a nylon mesh with an opening of 48 µm, and then through a high magnetic force mag-filter (manufactured by Eishin, surface magnetic flux density: 17000 gauss) to prepare an 8% solution of the dispersant (A).

Subsequently, in a stainless steel container, 89.5 parts of N-methyl-2-pyrrolidone (NMP) and 7.5 parts of the 8% solution of the dispersant (A) were added and stirred with a disperser until uniform. Then, 3 parts of carbon nanotubes (C1) were added while stirring with the disperser, and a fine emulsion screen was mounted to a high shear mixer (L5M-A, manufactured by SILVERSON), the entire mixture was made uniform at the speed of 9,000 rpm, and batch-type dispersion was performed until the dispersion particle size as measured by a grind gauge became equal to or less than 250 µm. Then, the mixture was passed through a high magnetic force mag-filter (manufactured by Eishin, surface magnetic flux density: 17000 gauss) to prepare a carbon nanotube preliminary dispersion liquid (C1). Subsequently, the carbon nanotube preliminary dispersion liquid was fed and subjected to a circulation-type dispersion process (bead filling rate 80%, peripheral speed 12 m/s) for a residence time of 15 minutes using a bead mill (manufactured by Ashizawa Finetech Ltd., MUGENFLOW (registered trademark)) filled with zirconia beads with a diameter of 1.0 mm φ. The dispersion was performed while adjusting the discharge amount so that the number of passes per minute of residence time was 4 passes, and the total number of passes for the residence time of 15 minutes was 60 passes. Next, the dispersed liquid was supplied to a high-pressure homogenizer (manufactured by Sugino Machine Ltd., Star Burst Lab) and subjected to 15-pass dispersion process. The dispersion process was performed by using a single nozzle chamber with a nozzle diameter of 0.25 mm at a pressure of 100 MPa. After that, the dispersed liquid was supplied to an electromagnet (manufactured by Taiho Magnetic Co., Ltd., EMF-100S, magnetic flux density: 16000 gauss, spatial volume: 1.7 L, equipped with 31 grid screens with a diameter of 10 cm and a thickness of 1.3 cm) and subjected to a 3-pass process. Subsequently, the liquid was passed through two depth filters connected in series (manufactured by 3M, PP non-woven fabric depth cartridge NT-T series, filtration accuracy: 20 µm) to prepare a carbon nanotube dispersion composition 1.

### (Examples 1-2 to 1-20), (Comparative Examples 1-1 to 1-13)

Dispersion compositions 1-1 to 1-20 and comparative dispersion compositions 1-1 to 1-13 were obtained by the same method as in the example 1-1, except for changing the dispersion conditions, carbon nanotubes, and dispersants as listed in Table 2. In the examples and comparative examples, for the depth filters, a PP non-woven fabric depth cartridge NT-T series manufactured by 3M was used, and for the surface filters, a nylon mesh was used. At the time of using a nylon mesh, instead of passing through two depth filters (PP non-woven fabric depth cartridge NT-T series manufactured by 3M, filtration accuracy: 20 µm) connected in series, a filtration funnel was used to pass the mixture through the nylon mesh to obtain the carbon nanotube dispersion compositions for the examples and comparative examples. The dispersion compositions of Comparative Examples 1-4 and 1-11 cannot be prepared because the compositions cannot be filtered through filters with filtration accuracies of 3 µm or 20 µm.

### [Table 2]

**Table 2**

| Carbon nanotube dispersion composition | | Composition | | | | | | | | | | Dispersion condition | | Metal foreign matter removal process | | | | | |
|---|---|---|---|---|---|---|---|---|---|---|---|---|---|---|---|---|---|---|---|
| | | Carbon nanotube | | | | | | Dispersant | | | NMP | | | Magnet processing condition | | | Filter condition | | |
| | | Type | Addition amount (Part) | Purification process | | Pulverization processing beads | Magnet processing | Type | Addition amount (Part) | Dispersant amount/CNT 100 parts | Addition amount (Part) | Circulation-type dispersion processing residence time | Number of passes | Magnet type | Magnetic flux density (gauss) | Number of passes | Filter type | Filter accuracy | Connection |
| | | | | Temperature | Condition | | | | | | | | | | | | | | |
| Example 1-1 | Dispersion Composition 1 | C1 | 3.0 | 25°C | HCl | n.a. | n.a. | A | 0.6 | 20 | 96.4 | 15 | 15 | Electromagnet | 16000 | 3 | Depth filter | 20 µm | Two in serial connection |
| Example 1-2 | Dispersion Composition 2 | C2 | 3.0 | 25°C | HCl | ZrO | n.a. | A | 0.6 | 20 | 96.4 | 15 | 15 | Electromagnet | 16000 | 3 | Depth filter | 20 µm | Two in serial connection |
| Example 1-3 | Dispersion Composition 3 | D1 | 3.0 | 1600°C | Cl | n.a. | n.a. | A | 0.6 | 20 | 96.4 | 15 | 15 | Electromagnet | 16000 | 3 | Depth filter | 20 µm | Two in serial connection |
| Example 1-4 | Dispersion Composition 4 | E1 | 3.0 | 1800°C | Cl | n.a. | n.a. | A | 0.6 | 20 | 96.4 | 15 | 15 | Electromagnet | 16000 | 3 | Depth filter | 20 µm | Two in serial connection |
| Example 1-5 | Dispersion Composition 5 | E2 | 3.0 | 1800°C | Cl | n.a. | Electromagnet | A | 0.6 | 20 | 96.4 | 15 | 15 | Electromagnet | 16000 | 3 | Depth filter | 20 µm | Two in serial connection |
| Example 1-6 | Dispersion Composition 6 | E3 | 3.0 | 1800°C | Cl | ZrO | Electromagnet | A | 0.6 | 20 | 96.4 | 15 | 15 | Electromagnet | 16000 | 1 | Depth filter | 20 µm | Two in serial connection |
| Example 1-7 | Dispersion Composition 7 | E3 | 3.0 | 1800°C | Cl | ZrO | Electromagnet | A | 0.6 | 20 | 96.4 | 15 | 15 | Electromagnet | 16000 | 2 | Depth filter | 20 µm | Two in serial connection |
| Example 1-8 | Dispersion Composition 8 | E3 | 3.0 | 1800°C | Cl | ZrO | Electromagnet | A | 0.6 | 20 | 96.4 | 15 | 15 | Electromagnet | 16000 | 3 | Depth filter | 20 µm | Two in serial connection |
| Example 1-9 | Dispersion Composition 9 | E3 | 3.0 | 1800°C | Cl | ZrO | Electromagnet | A | 0.6 | 20 | 96.4 | 15 | 15 | Electromagnet | 16000 | 3 | Depth filter | 40 µm | Two in serial connection |
| Example 1-10 | Dispersion Composition 10 | E3 | 3.0 | 1800°C | Cl | ZrO | Electromagnet | A | 0.6 | 20 | 96.4 | 15 | 15 | Electromagnet | 16000 | 3 | Depth filter | 50 µm | Two in serial connection |
| Example 1-11 | Dispersion Composition 11 | E3 | 3.0 | 1800°C | Cl | ZrO | Electromagnet | A | 0.6 | 20 | 96.4 | 15 | 15 | Electromagnet | 16000 | 3 | Depth filter | 70 µm | Two in serial connection |
| Example 1-12 | Dispersion Composition 12 | E3 | 3.0 | 1800°C | Cl | ZrO | Electromagnet | A | 0.6 | 20 | 96.4 | 15 | 15 | n.a. | n.a. | 0 | Depth filter | 20 µm | Two in serial connection |
| Example 1-13 | Dispersion Composition 13 | E3 | 3.0 | 1800°C | Cl | ZrO | Electromagnet | A | 0.6 | 20 | 96.4 | 15 | 15 | Electromagnet | 16000 | 3 | Surface filter | 48 µm | One piece |
| Example 1-14 | Dispersion Composition 14 | F1 | 3.0 | 2000°C | Cl | n.a. | n.a. | A | 0.6 | 20 | 96.4 | 15 | 15 | Electromagnet | 16000 | 3 | Depth filter | 20 µm | Two in serial connection |
| Example 1-15 | Dispersion Composition 15 | H1 | 3.0 | 1800°C | Cl | ZrO | Electromagnet | A | 1.2 | 40 | 95.8 | 15 | 15 | Electromagnet | 16000 | 3 | Depth filter | 20 µm | Two in serial connection |
| Example 1-16 | Dispersion Composition 16 | E3 | 3.0 | 1800°C | Cl | ZrO | Electromagnet | B | 0.6 | 20 | 96.4 | 15 | 15 | Electromagnet | 16000 | 3 | Depth filter | 20 µm | Two in serial connection |
| Example 1-17 | Dispersion Composition 17 | E3 | 3.0 | 1800°C | Cl | ZrO | Electromagnet | C | 0.6 | 20 | 96.4 | 15 | 15 | Electromagnet | 16000 | 3 | Depth filter | 20 µm | Two in serial connection |
| Example 1-18 | Dispersion Composition 18 | E3 | 3.0 | 1800°C | Cl | ZrO | Electromagnet | D | 0.6 | 20 | 96.4 | 15 | 15 | Electromagnet | 16000 | 3 | Depth filter | 20 µm | Two in serial connection |
| Example 1-19 | Dispersion Composition 19 | E3 | 3.0 | 1800°C | Cl | ZrO | Electromagnet | F | 0.6 | 20 | 96.4 | 15 | 15 | Electromagnet | 16000 | 3 | Depth filter | 20 µm | Two in serial connection |
| Example 1-20 | Dispersion Composition 20 | E3 | 3.0 | 1800°C | Cl | ZrO | Electromagnet | G | 0.6 | 20 | 96.4 | 15 | 15 | Electromagnet | 16000 | 3 | Depth filter | 20 µm | Two in serial connection |
| Comparative Example 1-1 | Comparative Dispersion Composition 1 | A1 | 3.0 | n.a. | n.a. | n.a. | n.a. | A | 0.6 | 20 | 96.4 | 15 | 15 | Electromagnet | 16000 | 3 | Depth filter | 20 µm | Two in serial connection |
| Comparative Example 1-2 | Comparative Dispersion Composition 2 | B1 | 3.0 | n.a. | n.a. | n.a. | n.a. | A | 1.2 | 40 | 95.8 | 15 | 15 | Electromagnet | 16000 | 3 | Depth filter | 20 µm | Two in serial connection |
| Comparative Example 1-3 | Comparative Dispersion Composition 3 | C1 | 3.0 | 25°C | HCl | n.a. | n.a. | A | 0.6 | 20 | 96.4 | 15 | 15 | Electromagnet | 16000 | 3 | Depth filter | 70 µm | Two in serial connection |
| Comparative Example 1-4 | Comparative Dispersion Composition 4 | C1 | 3.0 | 25°C | HCl | n.a. | n.a. | A | 0.6 | 20 | 96.4 | 15 | 15 | Electromagnet | 16000 | 3 | Surface filter | 3 µm | One piece |
| Comparative Example 1-5 | Comparative Dispersion Composition 5 | C1 | 3.0 | 25°C | HCl | n.a. | n.a. | A | 0.6 | 20 | 96.4 | 15 | 15 | Electromagnet | 16000 | 3 | Surface filter | 48 µm | One piece |
| Comparative Example 1-6 | Comparative Dispersion Composition 6 | C1 | 3.0 | 25°C | HCl | n.a. | n.a. | A | 0.6 | 20 | 96.4 | 15 | 15 | Electromagnet | 16000 | 1 | Depth filter | 20 µm | Two in serial connection |
| Comparative Example 1-7 | Comparative Dispersion Composition 7 | C1 | 3.0 | 25°C | HCl | n.a. | n.a. | A | 0.6 | 20 | 96.4 | 15 | 15 | Electromagnet | 16000 | 3 | Depth filter | 20 µm | One strip |
| Comparative Example 1-8 | Comparative Dispersion Composition 9 | E1 | 3.0 | 1800°C | Cl | n.a. | n.a. | A | 0.6 | 20 | 96.4 | 15 | 15 | n.a. | n.a. | 0 | n.a. | n.a. | n.a. |
| Comparative Example 1-9 | Comparative Dispersion Composition 9 | E1 | 3.0 | 1800°C | Cl | n.a. | n.a. | E | 0.6 | 20 | 96.4 | 15 | 15 | Electromagnet | 16000 | 3 | Depth filter | 20 µm | Two in serial connection |
| Comparative Example 1-10 | Comparative Dispersion Composition 10 | E1 | 3.0 | 1800°C | Cl | n.a. | n.a. | H | 0.6 | 20 | 96.4 | 15 | 15 | Electromagnet | 16000 | 3 | Depth filter | 20 µm | Two in serial connection |
| Comparative Example 1-11 | Comparative Dispersion Composition 11 | E1 | 3.0 | 1800°C | Cl | n.a. | n.a. | A | 0.6 | 20 | 96.4 | 15 | 0 | Electromagnet | 16000 | 3 | Depth filter | 20 µm | Two in serial connection |
| Comparative Example 1-12 | Comparative Dispersion Composition 12 | G1 | 3.0 | 3000°C | Cl | n.a. | n.a. | A | 0.6 | 20 | 96.4 | 15 | 15 | Electromagnet | 16000 | 3 | Depth filter | 20 µm | Two in serial connection |
| Comparative Example 1-13 | Comparative Dispersion Composition 13 | I1 | 3.0 | 1600°C | Cl | n.a. | n.a. | A | 0.6 | 20 | 96.4 | 15 | 15 | Electromagnet | 16000 | 3 | Depth filter | 20 µm | Two in serial connection |

Table 3 shows the evaluation results of the dispersion compositions prepared in (Examples 1-1 to 1-20) and (Comparative Examples 1-1 to 1-13).

### [Table 3]

**Table 3**

| CNT Dispersion Composition | | Evaluation results | | | | | | |
|---|---|---|---|---|---|---|---|---|
| | | Weight of metal foreign particles (mg) | Evaluation on weight of metal foreign particles | Metal element amount (ppm) | Evaluation on metal element amount | Initial viscosity (mPa·s) | Evaluation on initial viscosity | Particle size |
| Example 1-1 | Dispersion Composition 1 | 0.60 | C | 95 | Δ | 600 | ○ | ⊚ |
| Example 1-2 | Dispersion Composition 2 | 0.44 | C | 90 | Δ | 550 | ○ | ⊚ |
| Example 1-3 | Dispersion Composition 3 | 0.25 | B | 50 | Δ | 300 | ⊚ | ⊚ |
| Example 1-4 | Dispersion Composition 4 | 0.15 | B | 20 | ⊚ | 200 | ⊚ | ⊚ |
| Example 1-5 | Dispersion Composition 5 | 0.06 | A | 20 | ⊚ | 200 | ⊚ | ⊚ |
| Example 1-6 | Dispersion Composition 6 | 0.13 | B | 15 | ⊚ | 200 | ⊚ | ⊚ |
| Example 1-7 | Dispersion Composition 7 | 0.08 | A | 15 | ⊚ | 200 | ⊚ | ⊚ |
| Example 1-8 | Dispersion Composition 8 | 0.04 | A | 15 | ⊚ | 200 | ⊚ | ⊚ |
| Example 1-9 | Dispersion Composition 9 | 0.13 | B | 15 | ⊚ | 200 | ⊚ | ⊚ |
| Example 1-10 | Dispersion Composition 10 | 0.29 | B | 15 | ⊚ | 200 | ⊚ | ⊚ |
| Example 1-11 | Dispersion Composition 11 | 0.73 | C | 15 | ⊚ | 200 | ⊚ | ⊚ |
| Example 1-12 | Dispersion Composition 12 | 0.46 | C | 20 | ⊚ | 200 | ⊚ | ⊚ |
| Example 1-13 | Dispersion Composition 13 | 1.00 | C | 20 | ⊚ | 200 | ⊚ | ⊚ |
| Example 1-14 | Dispersion Composition 14 | 0.23 | B | 20 | ⊚ | 100 | ⊚ | ○ |
| Example 1-15 | Dispersion Composition 15 | 0.06 | A | 15 | ⊚ | 450 | ⊚ | ⊚ |
| Example 1-16 | Dispersion Composition 16 | 0.06 | A | 20 | ⊚ | 250 | ⊚ | ⊚ |
| Example 1-17 | Dispersion Composition 17 | 0.04 | A | 25 | ⊚ | 500 | ○ | ⊚ |
| Example 1-18 | Dispersion Composition 18 | 0.10 | A | 25 | ⊚ | 600 | ○ | ○ |
| Example 1-19 | Dispersion Composition 19 | 0.10 | A | 25 | ⊚ | 600 | ○ | ○ |
| Example 1-20 | Dispersion Composition 20 | 0.04 | A | 10 | ⊚ | 100 | ⊚ | ⊚ |
| Comparative Example 1-1 | Comparative Dispersion Composition 1 | 2.19 | D | 650 | × | 800 | ○ | ⊚ |
| Comparative Example 1-2 | Comparative Dispersion Composition 2 | 2.33 | D | 550 | × | 1200 | Δ | ⊚ |
| Comparative Example 1-3 | Comparative Dispersion Composition 3 | 2.63 | D | 150 | × | 600 | ○ | ⊚ |
| Comparative Example 1-4 | Comparative Dispersion Composition 4 | | | | | | | |
| Comparative Example 1-5 | Comparative Dispersion Composition 5 | 3.15 | D | 180 | × | 600 | ○ | ⊚ |
| Comparative Example 1-6 | Comparative Dispersion Composition 6 | 1.63 | D | 155 | × | 600 | ○ | ⊚ |
| Comparative Example 1-7 | Comparative Dispersion Composition 7 | 2.02 | D | 155 | × | 600 | ○ | ⊚ |
| Comparative Example 1-8 | Comparative Dispersion Composition 8 | 2.33 | D | 35 | ○ | 200 | ⊚ | ⊚ |
| Comparative Example 1-9 | Comparative Dispersion Composition 9 | 1.17 | D | 35 | ○ | 1000 | Δ | Δ |
| Comparative Example 1-10 | Comparative Dispersion Composition 10 | 1.23 | D | 30 | ○ | 1200 | Δ | Δ |
| Comparative Example 1-11 | Comparative Dispersion Composition 11 | | | | | | | |
| Comparative Example 1-12 | Comparative Dispersion Composition 12 | 1.10 | D | 20 | ⊚ | 50 | ⊚ | Δ |
| Comparative Example 1-13 | Comparative Dispersion Composition 13 | 1.08 | D | 90 | Δ | 80 | ⊚ | Δ |

### (Example 2-1)

In a plastic container with a capacity of 150 cm³, 18.8 parts by mass of an NMP solution in which 8 mass% of PVDF (polyvinylidene fluoride, manufactured by Solvay, Solef#5130) were dissolved and 8 parts by mass of NMP were measured. Then, 13.3 parts by mass of the carbon nanotube dispersion composition (dispersion composition 1) were added, and the mixture was stirred for 30 seconds at 2000 rpm by using a rotation/revolution mixer (AWATORI RENTARO, ARE-310). Subsequently, 98.1 parts by mass of the positive electrode active substance (manufactured by BASF TODA Battery Materials LLC, HED (registered trademark) NCM-111 1100) were added, and the mixture was stirred for 2.5 minutes at 2000 rpm using a rotation/revolution mixer (AWATORI RENTARO, ARE-310) to obtain a composite slurry (composite slurry 1).

Then, the composite slurry (composite slurry 1) was coated onto an aluminum foil by using an applicator to achieve a weight per unit area of 20 mg/cm² for the electrode. The coated film was then dried in an electric oven at 120°C ± 5°C for 25 minutes to obtain an electrode film (electrode film 1). After that, the electrode film (electrode film 1) was subjected to a rolling process by using a roll press (manufactured by Sankumetal, 3t hydraulic roll press) to obtain a positive electrode (positive electrode 1). The weight per unit area of the composite layer was 20 mg/cm², and the density of the composite layer after the rolling process was set to 3.1 g/cc.

### (Examples 2-2 to 2-20), (Comparative Examples 2-1 to 2-13)

As shown in Table 4, composite slurries 2 to comparative composite slurries 13, electrode films 2 to comparative electrode films 13, and positive electrodes 2 to comparative positive electrodes 13 were obtained by the same method as in example 2-1, except that the dispersion compositions 2 to comparative dispersion compositions 13 were used instead of the dispersion composition 1.

Table 4 shows the evaluation results of the electrode films prepared in Examples 2-1 to 2-20 and Comparative Examples 2-1 to 2-13.

### [Table 4]

**Table 4**

| Electrode film | | Composite slurry | CNT Dispersion Composition | Evaluation results | |
|---|---|---|---|---|---|
| | | | | Volume resistivity | Peel strength |
| Example 2-1 | Electrode film 1 | Composite slurry 1 | Dispersion Composition 1 | ○ | ○ |
| Example 2-2 | Electrode film 2 | Composite slurry 2 | Dispersion Composition 2 | ○ | ○ |
| Example 2-3 | Electrode film 3 | Composite slurry 3 | Dispersion Composition 3 | ○ | ○ |
| Example 2-4 | Electrode film 4 | Composite slurry 4 | Dispersion Composition 4 | ○ | ○ |
| Example 2-5 | Electrode film 5 | Composite slurry 5 | Dispersion Composition 5 | ○ | ○ |
| Example 2-6 | Electrode film 6 | Composite slurry 6 | Dispersion Composition 6 | ⊚ | ○ |
| Example 2-7 | Electrode film 7 | Composite slurry 7 | Dispersion Composition 7 | ⊚ | ○ |
| Example 2-8 | Electrode film 8 | Composite slurry 8 | Dispersion Composition 8 | ⊚ | ○ |
| Example 2-9 | Electrode film 9 | Composite slurry 9 | Dispersion Composition 9 | ⊚ | ○ |
| Example 2-10 | Electrode film 10 | Composite slurry 10 | Dispersion Composition 10 | ⊚ | ○ |
| Example 2-11 | Electrode film 11 | Composite slurry 11 | Dispersion Composition 11 | ⊚ | ○ |
| Example 2-12 | Electrode film 12 | Composite slurry 12 | Dispersion Composition 12 | ⊚ | ○ |
| Example 2-13 | Electrode film 13 | Composite slurry 13 | Dispersion Composition 13 | ⊚ | ○ |
| Example 2-14 | Electrode film 14 | Composite slurry 14 | Dispersion Composition 14 | Δ | ○ |
| Example 2-15 | Electrode film 15 | Composite slurry 15 | Dispersion Composition 15 | ⊚ | ⊚ |
| Example 2-16 | Electrode film 16 | Composite slurry 16 | Dispersion Composition 16 | ⊚ | ⊚ |
| Example 2-17 | Electrode film 17 | Composite slurry 17 | Dispersion Composition 17 | ⊚ | ⊚ |
| Example 2-18 | Electrode film 18 | Composite slurry 18 | Dispersion Composition 18 | ○ | ○ |
| Example 2-19 | Electrode film 19 | Composite slurry 19 | Dispersion Composition 19 | ○ | ○ |
| Example 2-20 | Electrode film 20 | Composite slurry 20 | Dispersion Composition 20 | ⊚ | ⊚ |
| Comparative Example 2-1 | Comparative electrode film 1 | Comparative composite slurry 1 | Comparative Dispersion Composition 1 | ○ | ○ |
| Comparative Example 2-2 | Comparative electrode film 2 | Comparative composite slurry 2 | Comparative Dispersion Composition 2 | ⊚ | ○ |
| Comparative Example 2-3 | Comparative electrode film 3 | Comparative composite slurry 3 | Comparative Dispersion Composition 3 | ○ | ○ |
| Comparative Example 2-5 | Comparative electrode film 5 | Comparative composite slurry 5 | Comparative Dispersion Composition 5 | ○ | ○ |
| Comparative Example 2-6 | Comparative electrode film 6 | Comparative composite slurry 6 | Comparative Dispersion Composition 6 | ○ | ○ |
| Comparative Example 2-7 | Comparative electrode film 7 | Comparative composite slurry 7 | Comparative Dispersion Composition 7 | ○ | ○ |
| Comparative Example 2-8 | Comparative electrode film 8 | Comparative composite slurry 8 | Comparative Dispersion Composition 8 | ○ | Δ |
| Comparative Example 2-9 | Comparative electrode film 9 | Comparative composite slurry 9 | Comparative Dispersion Composition 9 | × | Δ |
| Comparative Example 2-10 | Comparative electrode film 10 | Comparative composite slurry 10 | Comparative Dispersion Composition 10 | × | Δ |
| Comparative Example 2-12 | Comparative electrode film 12 | Comparative composite slurry 12 | Comparative Dispersion Composition 12 | Δ | Δ |
| Comparative Example 2-13 | Comparative electrode film 13 | Comparative composite slurry 13 | Comparative Dispersion Composition 13 | × | Δ |

### (Example 3-1)

The positive electrode (positive electrode 1) and a standard negative electrode were punched out in a size of 45 mm × 40 mm and 50 mm × 45 mm, respectively, and inserted into an aluminum laminate bag together with a separator (porous polypropylene film) to be placed between them, and dried in an electric oven at 60°C for 1 hour. Subsequently, 2 mL of an electrolyte (a mixed solvent was prepared by mixing, at a ratio (volume ratio) of 1:1:1, ethylene carbonate, ethyl methyl carbonate, and dimethyl carbonate, and, as an additive, 2 parts by mass of vinylene carbonate (VC) were added to 10 parts by mass of the mixed solvent, and then LiPF₆ was further dissolved at a concentration of 1M to obtain a non-aqueous electrolyte) was injected into a glove box filled with argon. After that, an aluminum-made laminate was sealed to prepare a laminate-type lithium-ion secondary battery (secondary battery 1).

### (Examples 3-2 to 3-20), (Comparative Examples 3-1 to 3-13)

Laminate-type lithium-ion secondary batteries (secondary battery 2) to (comparative secondary battery 13) were prepared by the same method as the preparation of the laminate-type lithium-ion secondary battery (secondary battery 1), except that the positive electrodes were changed to those listed in Table 5.

Table 5 shows the evaluation results of the secondary batteries prepared in Examples 3-1 to 3-20 and Comparative Examples 3-1 to 3-13.

### [Table 5]

**Table 5**

| Secondary battery | | Positive electrode | Evaluation results | |
|---|---|---|---|---|
| | | | Rate properties | High-temperature cycle properties |
| Example 3-1 | Secondary battery 1 | Positive electrode 1 | ○ | Δ |
| Example 3-2 | Secondary battery 2 | Positive electrode 2 | ⊚ | ○ |
| Example 3-3 | Secondary battery 3 | Positive electrode 3 | ○ | ○ |
| Example 3-4 | Secondary battery 4 | Positive electrode 4 | ○ | ○ |
| Example 3-5 | Secondary battery 5 | Positive electrode 5 | ○ | ⊚ |
| Example 3-6 | Secondary battery 6 | Positive electrode 6 | ⊚ | ⊚ |
| Example 3-7 | Secondary battery 7 | Positive electrode 7 | ⊚ | ⊚ |
| Example 3-8 | Secondary battery 8 | Positive electrode 8 | ⊚ | ⊚ |
| Example 3-9 | Secondary battery 9 | Positive electrode 9 | ⊚ | ⊚ |
| Example 3-10 | Secondary battery 10 | Positive electrode 10 | ⊚ | ○ |
| Example 3-11 | Secondary battery 11 | Positive electrode 11 | ⊚ | ○ |
| Example 3-12 | Secondary battery 12 | Positive electrode 12 | ⊚ | ○ |
| Example 3-13 | Secondary battery 13 | Positive electrode 13 | ○ | Δ |
| Example 3-14 | Secondary battery 14 | Positive electrode 14 | ○ | ○ |
| Example 3-15 | Secondary battery 15 | Positive electrode 15 | ⊚ | ⊚ |
| Example 3-16 | Secondary battery 16 | Positive electrode 16 | ⊚ | ⊚ |
| Example 3-17 | Secondary battery 17 | Positive electrode 17 | ○ | ⊚ |
| Example 3-18 | Secondary battery 18 | Positive electrode 18 | ○ | ⊚ |
| Example 3-19 | Secondary battery 19 | Positive electrode 19 | ○ | ⊚ |
| Example 3-20 | Secondary battery 20 | Positive electrode 20 | ⊚ | ⊚ |
| Comparative Example 3-1 | Comparative secondary battery 1 | Comparative positive electrode 1 | ○ | × |
| Comparative Example 3-2 | Comparative secondary battery 2 | Comparative positive electrode 2 | ⊚ | × |
| Comparative Example 3-3 | Comparative secondary battery 3 | Comparative positive electrode 3 | ○ | × |
| Comparative Example 3-5 | Comparative secondary battery 5 | Comparative positive electrode 5 | ○ | × |
| Comparative Example 3-6 | Comparative secondary battery 6 | Comparative positive electrode 6 | ○ | × |
| Comparative Example 3-7 | Comparative secondary battery 7 | Comparative positive electrode 7 | ○ | × |
| Comparative Example 3-8 | Comparative secondary battery 8 | Comparative positive electrode 8 | Δ | × |
| Comparative Example 3-9 | Comparative secondary battery 9 | Comparative positive electrode 9 | × | × |
| Comparative Example 3-10 | Comparative secondary battery 10 | Comparative positive electrode 10 | × | × |
| Comparative Example 3-12 | Comparative secondary battery 12 | Comparative positive electrode 12 | × | × |
| Comparative Example 3-13 | Comparative secondary battery 13 | Comparative positive electrode 13 | × | × |

### (Example 1-21)

In a stainless steel container, 92 parts of N-methyl-2-pyrrolidone (NMP) and 8 parts of a dispersant (F) were added and stirred by using a disperser under the condition of 80°C. After completely dissolving the dispersant (F), the mixture was passed through a nylon mesh with an opening of 48 µm, and then through a high magnetic force mag-filter (manufactured by Eishin, surface magnetic flux density: 17000 gauss) to prepare an 8% solution of the dispersant (F).

Subsequently, in a stainless steel container, 89.5 parts of N-methyl-2-pyrrolidone (NMP) and 15 parts of the 8% solution of the dispersant (F) were added and stirred with a disperser until uniform. Then, 3 parts of carbon nanotubes (H1) were added while stirring with the disperser, and a fine emulsion screen was mounted to a high shear mixer (L5M-A, manufactured by SILVERSON), the entire mixture was made uniform at the speed of 9,000 rpm, and batch-type dispersion was performed until the dispersion particle size as measured by a grind gauge became equal to or less than 250 µm. Then, the mixture was passed through a high magnetic force mag-filter (manufactured by Eishin, surface magnetic flux density: 17000 gauss) to prepare a carbon nanotube preliminary dispersion liquid. Subsequently, the carbon nanotube preliminary dispersion liquid was fed and subjected to a circulation-type dispersion process (bead filling rate 80%, peripheral speed 12 m/s) for a residence time of 15 minutes using a bead mill (manufactured by Ashizawa Finetech Ltd., MUGENFLOW (registered trademark)) filled with zirconia beads with a diameter of 1.0 mm φ.

The dispersion was performed while adjusting the discharge amount so that the number of passes per minute of residence time was 4 passes, and the total number of passes for the residence time of 15 minutes was 60 passes. Subsequently, the dispersed liquid was supplied to a valve-type high-pressure homogenizer (manufactured by Sanmaru Machinery Industry Co., Ltd., HC3-5 (product name)) and subjected to a circulation-type dispersion process. The dispersion process was performed at a pressure of 80 Mpa and a processing flow rate of 2000 L/H, with a total number of passes of 15 times. After the dispersion process was performed, the dispersed liquid was supplied to an electromagnet (manufactured by Taiho Magnetic Co., Ltd., EMF-100S, magnetic flux density: 16000 gauss, spatial volume: 1.7 L, equipped with 31 grid screens with a diameter of 10 cm and a thickness of 1.3 cm) and subjected to a 3-pass process. Subsequently, the liquid was passed through two depth filters connected in series (manufactured by 3M, PP non-woven fabric depth cartridge NT-T series, filtration accuracy: 20 µm) to prepare a carbon nanotube dispersion composition 21.

### (Example 1-22)

A carbon nanotube dispersion composition 22 was prepared in the same manner as in Example 1-21, except that the total number of passes through the valve-type homogenizer was changed to 10 passes.

### (Example 1-23)

A carbon nanotube dispersion composition 23 was prepared in the same manner as in Example 1-21, except that the total number of passes through the valve-type homogenizer was changed to 5 passes.

### (Examples 2-21 to 2-23)

(Composite slurry 21) to (Composite slurry 23), (Electrode film 21) to (Electrode film 23), and (Positive electrode 21) to (Positive electrode 23) were prepared in the same manner as in Example 2-1, except that (Carbon nanotube dispersion composition 21) to (Carbon nanotube dispersion composition 23) were used instead of the carbon nanotube dispersion composition 1.

### (Examples 3-21 to 3-23)

(Secondary battery 21) to (Secondary battery 23) were prepared in the same manner as in Example 3-1, except that (Positive electrode 21) to (Positive electrode 23) were used instead of the positive electrode 1.

Table 6 shows the evaluation results of the carbon nanotube dispersion compositions prepared in (Examples 1-21 to 1-23), and the electrode films and secondary batteries prepared by using the compositions.

### [Table 6]

**Table 6**

| CNT Dispersion Composition | | Evaluation results | | | |
|---|---|---|---|---|---|
| | | Evaluation on weight of metal foreign particles | Evaluation on metal element amount | Evaluation on initial viscosity | Particle size |
| Example 1-21 | Dispersion Composition 21 | A | ⊚ | ⊚ | ⊚ |
| Example 1-22 | Dispersion Composition 22 | A | ⊚ | ○ | ⊚ |
| Example 1-23 | Dispersion Composition 23 | A | ⊚ | △ | ○ |
| | | | | | |

| Electrode film | | Evaluation results | | | |
|---|---|---|---|---|---|
| | | Volume resistivity | Peel strength | | |
| Example 2-21 | Electrode film 21 | ⊚ | ⊚ | | |
| Example 2-22 | Electrode film 22 | ⊚ | ⊚ | | |
| Example 2-23 | Electrode film 23 | ○ | ○ | | |
| | | | | | |

| Secondary battery | | Evaluation results | | | |
|---|---|---|---|---|---|
| | | Rate properties | High-temperature cycle properties | | |
| Example 3-21 | Secondary battery 21 | ⊚ | ⊚ | | |
| Example 3-22 | Secondary battery 22 | ⊚ | ⊚ | | |
| Example 3-23 | Secondary battery 23 | ○ | ⊚ | | |

In the above examples, the carbon nanotube dispersion compositions including the carbon nanotubes, the copolymer N, and the amide-based polar solvent were used. In the carbon nanotube dispersion compositions, the content of the metal foreign particles determined under Condition 1 was 1.0 mg or less, and the copolymer N had an alkylene structural unit with a content ratio of 50 mass% or more and 75 mass% or less, and the nitrile group-containing structural unit had a content ratio of 25 mass% or more and 50 mass% or less. In the examples, compared to the comparative examples, the carbon nanotube dispersion composition had a lower initial viscosity, and lithium-ion secondary batteries with superior secondary battery properties, especially high-temperature cycle properties, were obtained. Therefore, it became clear that the invention can provide lithium-ion secondary batteries with high capacity, high output, and high durability, which are difficult to achieve with conventional carbon nanotubes dispersion compositions.

Vehicles having the lithium-ion secondary batteries of the invention can achieve high safety and improved fuel efficiency, as the batteries possess high charge-discharge performance and excellent high-temperature cycle properties.

### [Example B]

### (Example 1-W1)

In a stainless steel container, 98 parts of ion-exchanged water and 2 parts of a dispersant (J) were added and stirred by using a disperser. After completely dissolving the dispersant (J), the mixture was passed through a nylon mesh with an opening of 48 µm, and then through a high magnetic force mag-filter (manufactured by Eishin, surface magnetic flux density: 17000 gauss) to prepare a 2% solution of the dispersant (J).

Subsequently, in a stainless steel container, 67 parts of ion-exchanged water and 30 parts of the 2% solution of the dispersant (J) were added and stirred with a disperser until uniform. Then, 3 parts of carbon nanotubes (C1) were added while stirring with the disperser, and a fine emulsion screen was mounted to a high shear mixer (L5M-A, manufactured by SILVERSON), the entire mixture was made uniform at the speed of 9,000 rpm, and batch-type dispersion was performed until the dispersion particle size as measured by a grind gauge became equal to or less than 250 µm. Then, the mixture was passed through a high magnetic force mag-filter (manufactured by Eishin, surface magnetic flux density: 17000 gauss) to prepare a carbon nanotube preliminary dispersion liquid. Subsequently, the carbon nanotube preliminary dispersion liquid was fed and subjected to a circulation-type dispersion process (bead filling rate 80%, peripheral speed 12 m/s) for a residence time of 15 minutes using a bead mill (manufactured by Ashizawa Finetech Ltd., MUGENFLOW (registered trademark)) filled with zirconia beads with a diameter of 1.0 mm φ. The dispersion was performed while adjusting the discharge amount so that the number of passes per minute of residence time was 4 passes, and the total number of passes for the residence time of 15 minutes was 60 passes. Next, the dispersed liquid was supplied to a high-pressure homogenizer (manufactured by Sugino Machine Ltd., Star Burst Lab) and subjected to 15-pass dispersion process. The dispersion process was performed by using a single nozzle chamber with a nozzle diameter of 0.25 mm at a pressure of 100 MPa. After that, the dispersed liquid was supplied to an electromagnet (manufactured by Taiho Magnetic Co., Ltd., EMF-100S, magnetic flux density: 16000 gauss, spatial volume: 1.7 L, equipped with 31 grid screens with a diameter of 10 cm and a thickness of 1.3 cm) and subjected to a 3-pass process. Subsequently, the liquid was passed through two depth filters connected in series (manufactured by 3M, polypropylene (PP) non-woven fabric depth cartridge NT-T series, filtration accuracy: 20 µm) to prepare a carbon nanotube dispersion composition (dispersion composition W1).

### (Examples 1-W2 to 1-W19), (Comparative Examples 1-W1 to 1-W11)

Dispersion compositions W2 to W19 and comparative dispersion compositions W1 to W11 were obtained by the same method as in Example 1-W1, except for changing the dispersion conditions, carbon nanotubes, and dispersants, and water as listed in Table 2-2.

In the examples and comparative examples, for the depth filters, a PP non-woven fabric depth cartridge NT-T series manufactured by 3M was used, and for the surface filters, a nylon mesh was used. At the time of using a nylon mesh, instead of passing through two depth filters (PP non-woven fabric depth cartridge NT-T series manufactured by 3M, filtration accuracy: 20 µm) connected in series, a filtration funnel was used to pass the mixture through the nylon mesh to obtain the carbon nanotube dispersion compositions for the examples and comparative examples. The dispersion compositions of Comparative Examples 1-W4 and 1-W9 cannot be prepared because the compositions cannot be filtered through the filters.

### (Example 1-N20)

A carbon nanotube dispersion composition (dispersion composition N20) was prepared by the same method as in the example 1-W19, except that a dispersant (H) was used instead of the dispersant (J), and NMP| was used instead of ion-exchanged water.

### [Table B2]

**Table B2**

| Carbon nanotube dispersion compositior | | Composition | | | | | | | | | | Dispersion condition | | Metal foreign matter removal process | | | | | |
|---|---|---|---|---|---|---|---|---|---|---|---|---|---|---|---|---|---|---|---|
| | | Carbon nanotube | | | | | | Dispersant | | | Solvent | | | Magnet processing condition | | | Filter condition | | |
| | | Type | Addition amount (Part) | Purification process | | Pulverization processing beads | Magnet processing | Type | Addition amount (Part) | Dispersant amount/CNT 100 parts | Addition amount (Part) | Circulation-type dispersion processing residence time | Number of passes | Magnet type | Magnetic flux density (gauss) | Number of passes | Filter type | Filter accuracy | Connection |
| | | | | Temperature | Condition | | | | | | | | | | | | | | |
| Example 1-W1 | Dispersion Composition W1 | C1 | 3.0 | 25°C | HCl | n.a. | n.a. | J | 0.6 | 20 | 96.4 | 15 | 15 | Electromagnet | 16000 | 3 | Depth filter | 20 µm | Two in serial connection |
| Example 1-W2 | Dispersion Composition W2 | C2 | 3.0 | 25°C | HCl | ZrO | n.a. | J | 0.6 | 20 | 96.4 | 15 | 15 | Electromagnet | 16000 | 3 | Depth filter | 20 µm | Two in serial connection |
| Example 1-W3 | Dispersion Composition W3 | D1 | 3.0 | 1600°C | Cl | n.a. | n.a. | J | 0.6 | 20 | 96.4 | 15 | 15 | Electromagnet | 16000 | 3 | Depth filter | 20 µm | Two in serial connection |
| Example 1-W4 | Dispersion Composition W4 | E1 | 3.0 | 1800°C | Cl | n.a. | n.a. | J | 0.6 | 20 | 96.4 | 15 | 15 | Electromagnet | 16000 | 3 | Depth filter | 20 µm | Two in serial connection |
| Example 1-W5 | Dispersion Composition W5 | E2 | 3.0 | 1800°C | Cl | n.a. | Electromagnet | J | 0.6 | 20 | 96.4 | 15 | 15 | Electromagnet | 16000 | 3 | Depth filter | 20 µm | Two in serial connection |
| Example 1-W6 | Dispersion Composition W6 | E3 | 3.0 | 1800°C | Cl | ZrO | Electromagnet | J | 0.6 | 20 | 96.4 | 15 | 15 | Electromagnet | 16000 | 1 | Depth filter | 20 µm | Two in serial connection |
| Example 1-W7 | Dispersion Composition W7 | E3 | 3.0 | 1800°C | Cl | ZrO | Electromagnet | J | 0.6 | 20 | 96.4 | 15 | 15 | Electromagnet | 16000 | 2 | Depth filter | 20 µm | Two in serial connection |
| Example 1-W8 | Dispersion Composition W8 | E3 | 3.0 | 1800°C | Cl | ZrO | Electromagnet | J | 0.6 | 20 | 96.4 | 15 | 15 | Electromagnet | 16000 | 3 | Depth filter | 20 µm | Two in serial connection |
| Example 1-W9 | Dispersion Composition W9 | E3 | 3.0 | 1800°C | Cl | ZrO | Electromagnet | J | 0.6 | 20 | 96.4 | 15 | 15 | Electromagnet | 16000 | 3 | Depth filter | 40 µm | Two in serial connection |
| Example 1-W10 | Dispersion Composition W10 | E3 | 3.0 | 1800°C | Cl | ZrO | Electromagnet | J | 0.6 | 20 | 96.4 | 15 | 15 | Electromagnet | 16000 | 3 | Depth filter | 50 µm | Two in serial connection |
| Example 1-W11 | Dispersion Composition W11 | E3 | 3.0 | 1800°C | Cl | ZrO | Electromagnet | J | 0.6 | 20 | 96.4 | 15 | 15 | Electromagnet | 16000 | 3 | Depth filter | 70 µm | Two in serial connection |
| Example 1-W12 | Dispersion Composition W12 | E3 | 3.0 | 1800°C | Cl | ZrO | Electromagnet | J | 0.6 | 20 | 96.4 | 15 | 15 | n.a. | n.a. | 0 | Depth filter | 20 µm | Two in serial connection |
| Example 1-W13 | Dispersion Composition W13 | E3 | 3.0 | 1800°C | Cl | ZrO | Electromagnet | J | 0.6 | 20 | 96.4 | 15 | 15 | Electromagnet | 16000 | 3 | Surface filter | 48 µm | One piece |
| Example 1-W14 | Dispersion Composition W14 | F1 | 3.0 | 2000°C | Cl | n.a. | n.a. | J | 0.6 | 20 | 96.4 | 15 | 15 | Electromagnet | 16000 | 3 | Depth filter | 20 µm | Two in serial connection |
| Example 1-W15 | Dispersion Composition W15 | H1 | 3.0 | 1800°C | Cl | ZrO | Electromagnet | J | 1.2 | 40 | 95.8 | 15 | 15 | Electromagnet | 16000 | 3 | Depth filter | 20 µm | Two in serial connection |
| Example 1-W16 | Dispersion Composition W16 | E3 | 3.0 | 1800°C | Cl | ZrO | Electromagnet | H | 0.6 | 20 | 96.4 | 15 | 15 | Electromagnet | 16000 | 3 | Depth filter | 20 µm | Two in serial connection |
| Example 1-W17 | Dispersion Composition W17 | E3 | 3.0 | 1800°C | Cl | ZrO | Electromagnet | I | 0.6 | 20 | 96.4 | 15 | 15 | Electromagnet | 16000 | 3 | Depth filter | 20 µm | Two in serial connection |
| Example 1-W18 | Dispersion Composition W18 | J1 | 0.6 | | | n.a. | Electromagnet | J | 0.6 | 100 | 98.8 | 30 | 15 | Electromagnet | 16000 | 3 | Depth filter | 50 µm | Two in serial connection |
| Example 1-W19 | Dispersion Composition W19 | K1 | 0.6 | | | n.a. | Electromagnet | J | 0.6 | 100 | 98.8 | 30 | 15 | Electromagnet | 16000 | 3 | Depth filter | 50 µm | Two in serial connection |
| Example 1-N20 | Dispersion Composition N20 | K1 | 0.6 | | | n.a. | Electromagnet | H | 0.6 | 100 | 98.8 | 30 | 15 | Electromagnet | 16000 | 3 | Depth filter | 50 µm | Two in serial connection |
| Comparative Example 1-W1 | Comparative Dispersion Composition W1 | A1 | 3.0 | n.a. | n.a. | n.a. | n.a. | J | 0.6 | 20 | 96.4 | 15 | 15 | Electromagnet | 16000 | 3 | Depth filter | 20 µm | Two in serial connection |
| Comparative Example 1-W2 | Comparative Dispersion Composition W2 | B1 | 3.0 | n.a. | n.a. | n.a. | n.a. | J | 1.2 | 40 | 95.8 | 15 | 15 | Electromagnet | 16000 | 3 | Depth filter | 20 µm | Two in serial connection |
| Comparative Example 1-W3 | Comparative Dispersion Composition W3 | C1 | 3.0 | 25°C | HCl | n.a. | n.a. | J | 0.6 | 20 | 96.4 | 15 | 15 | Electromagnet | 16000 | 3 | Depth filter | 70 µm | Two in serial connection |
| Comparative Example 1-W4 | Comparative Dispersion Composition W4 | C1 | 3.0 | 25°C | HCl | n.a. | n.a. | J | 0.6 | 20 | 96.4 | 15 | 15 | Electromagnet | 16000 | 3 | Surface filter | 3 µm | One piece |
| Comparative Example 1-W5 | Comparative Dispersion Composition W5 | C1 | 3.0 | 25°C | HCl | n.a. | n.a. | J | 0.6 | 20 | 96.4 | 15 | 15 | Electromagnet | 16000 | 3 | Surface filter | 48 µm | One piece |
| Comparative Example 1-W6 | Comparative Dispersion Composition W6 | C1 | 3.0 | 25°C | HCl | n.a. | n.a. | J | 0.6 | 20 | 96.4 | 15 | 15 | Electromagnet | 16000 | 1 | Depth filter | 20 µm | Two in serial connection |
| Comparative Example 1-W7 | Comparative Dispersion Composition W7 | C1 | 3.0 | 25°C | HCl | n.a. | n.a. | J | 0.6 | 20 | 96.4 | 15 | 15 | Electromagnet | 16000 | 3 | Depth filter | 20 µm | One stirp |
| Comparative Example 1-W8 | Comparative Dispersion Composition W8 | E1 | 3.0 | 1800°C | Cl | n.a. | n.a. | J | 0.6 | 20 | 96.4 | 15 | 15 | n.a. | n.a. | 0 | n.a. | n.a. | n.a. |
| Comparative Example 1-W9 | Comparative Dispersion Composition W9 | E1 | 3.0 | 1800°C | Cl | n.a. | n.a. | J | 0.6 | 20 | 96.4 | 15 | 0 | Electromagnet | 16000 | 3 | Depth filter | 20 µm | Two in serial connection |
| Comparative Example 1-W10 | Comparative Dispersion Composition W10 | G1 | 3.0 | 3000°C | Cl | n.a. | n.a. | J | 0.6 | 20 | 96.4 | 15 | 15 | Electromagnet | 16000 | 3 | Depth filter | 20 µm | Two in serial connection |
| Comparative Example 1-W11 | Comparative Dispersion Composition W11 | I1 | 3.0 | 1600°C | Cl | n.a. | n.a. | J | 0.6 | 20 | 96.4 | 15 | 15 | Electromagnet | 16000 | 3 | Depth filter | 20 µm | Two in serial connection |

Table 3 shows the evaluation results of the dispersion compositions prepared in (Examples 1-W1 to 1-N20) and (Comparative Examples 1-W1 to 1-W11).

### [Table B3]

**Table B3**

| CNT Dispersion Composition | | Evaluation results | | | | | | |
|---|---|---|---|---|---|---|---|---|
| | | Weight of metal foreign particles (mg) | Evaluation on weight of metal foreign particles | Metal element amount (ppm) | Evaluation on metal element amount | Particle size | Initial viscosity (mPa·s) | Evaluation on initial viscosity |
| Example 1-W1 | Dispersion Composition W1 | 0.55 | C | 90 | △ | A | 500 | ○ |
| Example 1-W2 | Dispersion Composition W2 | 0.50 | C | 90 | △ | A | 400 | ⊚ |
| Example 1-W3 | Dispersion Composition W3 | 0.28 | B | 55 | △ | A | 300 | ⊚ |
| Example 1-W4 | Dispersion Composition W4 | 0.17 | B | 20 | ⊚ | A | 200 | ⊚ |
| Example 1-W5 | Dispersion Composition W5 | 0.06 | A | 20 | ⊚ | A | 200 | ⊚ |
| Example 1-W6 | Dispersion Composition W6 | 0.12 | B | 15 | ⊚ | A | 150 | ⊚ |
| Example 1-W7 | Dispersion Composition W7 | 0.09 | A | 15 | ⊚ | A | 150 | ⊚ |
| Example 1-W8 | Dispersion Composition W8 | 0.05 | A | 15 | ⊚ | A | 150 | ⊚ |
| Example 1-W9 | Dispersion Composition W9 | 0.15 | B | 15 | ⊚ | A | 150 | ⊚ |
| Example 1-W10 | Dispersion Composition W10 | 0.35 | B | 15 | ⊚ | A | 150 | ⊚ |
| Example 1-W11 | Dispersion Composition W11 | 0.80 | C | 15 | ⊚ | A | 150 | ⊚ |
| Example 1-W12 | Dispersion Composition W12 | 0.40 | C | 20 | ⊚ | A | 150 | ⊚ |
| Example 1-W13 | Dispersion Composition W13 | 0.98 | C | 20 | ⊚ | A | 150 | ⊚ |
| Example 1-W14 | Dispersion Composition W14 | 0.25 | B | 20 | ⊚ | B | 100 | ⊚ |
| Example 1-W15 | Dispersion Composition W15 | 0.06 | A | 15 | ⊚ | A | 450 | ⊚ |
| Example 1-W16 | Dispersion Composition W16 | 0.20 | B | 30 | ○ | B | 1500 | △ |
| Example 1-W17 | Dispersion Composition W17 | 0.10 | A | 25 | ⊚ | B | 900 | ○ |
| Example 1-W18 | Dispersion Composition W18 | 0.25 | B | 20 | ⊚ | B | 800 | ○ |
| Example 1-W19 | Dispersion Composition W19 | 0.20 | B | 25 | ⊚ | B | 900 | ○ |
| Example 1-N20 | Dispersion Composition N20 | 0.20 | A | 25 | ⊚ | B | 1600 | △ |
| Comparative Example 1-W1 | Comparative Dispersion Composition W1 | 2.30 | D | 630 | × | A | 800 | ○ |
| Comparative Example 1-W2 | Comparative Dispersion Composition W2 | 2.50 | D | 560 | × | A | 1200 | △ |
| Comparative Example 1-W3 | Comparative Dispersion Composition W3 | 2.70 | D | 170 | × | A | 600 | ○ |
| Comparative Example 1-W4 | Comparative Dispersion Composition W4 | | | | | | | |
| Comparative Example 1-W5 | Comparative Dispersion Composition W5 | 3.30 | D | 200 | × | A | 600 | ○ |
| Comparative Example 1-W6 | Comparative Dispersion Composition W6 | 1.80 | D | 150 | × | A | 600 | ○ |
| Comparative Example 1-W7 | Comparative Dispersion Composition W7 | 1.90 | D | 150 | × | A | 600 | ○ |
| Comparative Example 1-W8 | Comparative Dispersion Composition W8 | 2.50 | D | 40 | ○ | A | 200 | ⊚ |
| Comparative Example 1-W9 | Comparative Dispersion Composition W9 | | | | | | | |
| Comparative Example 1-W10 | Comparative Dispersion Composition W10 | 1.30 | D | 25 | ⊚ | C | 50 | ⊚ |
| Comparative Example 1-W11 | Comparative Dispersion Composition W11 | 1.10 | D | 105 | × | C | 80 | ⊚ |

### (Example 2-W1)

In a plastic container with a capacity of 150 cm³, 2.5 parts by mass of the carbon nanotube dispersion composition (dispersion composition W1), 12.5 parts by mass of an aqueous solution in which 2 mass% of CMC (manufactured by Daicel Fine Chem Ltd., #1190) was dissolved, and 12.0 parts by mass of ion-exchanged water were measured. Subsequently, by using a rotation/revolution mixer (manufactured by SHINKY, AWATORI RENTARO, ARE-310), the mixture was stirred at 2000 rpm for 30 seconds to obtain a carbon nanotube dispersion composition (carbon nanotube dispersion composition W1). Subsequently, 2.4 parts by mass of silicon monoxide (manufactured by Osaka Titanium Technologies Co., Ltd., SILICON MONOXIDE, SiO1.3C 5µm) were added and stirred for 30 seconds at 2000 rpm by using the rotation/revolution mixer. Furthermore, 21.9 parts by mass of artificial graphite (manufactured by Nippon Graphite Industries, Ltd., CGB-20) were added and stirred for 30 seconds at 2000 rpm by using the rotation/revolution mixer. Subsequently, 0.78 parts by mass of styrene-butadiene emulsion (manufactured by JSR Corporation, TRD2001) was added, and the mixture was stirred at 2000 rpm for 30 seconds using the rotation/revolution mixture to obtain a composite slurry (composite slurry W1).

Then, the composite slurry (composite slurry W1) was coated onto a copper foil by using an applicator to achieve a weight per unit area of 8 mg/cm² for the electrode. The coated film was then dried in an electric oven at 120°C ± 5°C for 25 minutes to obtain an electrode film (electrode film W1). Afterwards, the electrode film (electrode film W1) was subjected to rolling process by using a roll press to produce a negative electrode (negative electrode W1) with a basis weight amount of 8 mg/cm² per unit area of the electrode and a density of 1.6 g/cm³ for the composite layer after the rolling process.

### (Examples 2-W2 to 2-W17), (Comparative Examples 2-W1 to 2-W11)

As shown in Table B4, composite slurries W2 to comparative composite slurries W11, electrode films W2 to comparative electrode films W11, and negative electrodes W2 to comparative negative electrodes W11 were obtained by the same method as in example 2-W1, except that the dispersion compositions W2 to comparative dispersion compositions W11 were used instead of the dispersion composition W1.

### (Examples 2-W18 to 2-W19)

Composite slurries W18 to W19 were obtained by the same method as in Example 2-W1, except that the addition amounts of CNT dispersion composition and ion-exchanged water were changed. The addition amount of CNT dispersion composition was set to 16.7 parts by mass, and the addition amount of ion-exchanged water was set to 10.3 parts by mass.

### (Example 2-N20)

In a plastic container with a capacity of 150 cm³, 18.8 parts by mass of an NMP solution in which 8 mass% of polyvinylidene fluoride (PVDF, manufactured by Solvay, Solef#5130) were dissolved and 9.0 parts by mass of NMP were measured. Then, 16.7 parts by mass of the carbon nanotube dispersion composition (dispersion composition N20) were added, and the mixture was stirred for 30 seconds at 2000 rpm by using a rotation/revolution mixer (AWATORIRENTARO, ARE-310). Subsequently, 98.4 parts by mass of the positive electrode active substance (manufactured by BASF TODA Battery Materials LLC, HED (registered trademark) NCM-III 1100) were added, and the mixture was stirred for 2.5 minutes at 2000 rpm using a rotation/revolution mixer (AWATORI RENTARO, ARE-310) to obtain a composite slurry (composite slurry N20).

Then, the composite slurry (composite slurry N20) was coated onto an aluminum foil by using an applicator to achieve a weight per unit area of 20 mg/cm² for the electrode. The coated film was then dried in an electric oven at 120°C ± 5°C for 25 minutes to obtain an electrode film (electrode film 20). After that, the electrode film (electrode film N20) was subjected to a rolling process by using a roll press (manufactured by Sankumetal, 3t hydraulic roll press) to obtain a positive electrode (positive electrode N20). The weight per unit area of the composite layer was 20 mg/cm², and the density of the composite layer after the rolling process was set to 3.1 g/cc.

Table B4 shows the evaluation results of the electrode films prepared in (Examples 2-W1 to 2-N20) and (Comparative Examples 2-W1 to 2-W11).

### [Table B4]

**Table B4**

| Electrode film | | Composite slurry | CNT Dispersion Composition | Evaluation results |
|---|---|---|---|---|
| | | | | Peel strength |
| Example 2-W1 | Electrode film W1 | Composite slurry W1 | Dispersion Composition W1 | ○ |
| Example 2-W2 | Electrode film W2 | Composite slurry W2 | Dispersion Composition W2 | ○ |
| Example 2-W3 | Electrode film W3 | Composite slurry W3 | Dispersion Composition W3 | ○ |
| Example 2-W4 | Electrode film W4 | Composite slurry W4 | Dispersion Composition W4 | ○ |
| Example 2-W5 | Electrode film W5 | Composite slurry W5 | Dispersion Composition W5 | ○ |
| Example 2-W6 | Electrode film W6 | Composite slurry W6 | Dispersion Composition W6 | ○ |
| Example 2-W7 | Electrode film W7 | Composite slurry W7 | Dispersion Composition W7 | ○ |
| Example 2-W8 | Electrode film W8 | Composite slurry W8 | Dispersion Composition W8 | ○ |
| Example 2-W9 | Electrode film W9 | Composite slurry W9 | Dispersion Composition W9 | ○ |
| Example 2-W10 | Electrode film W10 | Composite slurry W10 | Dispersion Composition W10 | ○ |
| Example 2-W11 | Electrode film W11 | Composite slurry W11 | Dispersion Composition W11 | ○ |
| Example 2-W12 | Electrode film W12 | Composite slurry W12 | Dispersion Composition W12 | ○ |
| Example 2-W13 | Electrode film W13 | Composite slurry W13 | Dispersion Composition W13 | ○ |
| Example 2-W14 | Electrode film W14 | Composite slurry W14 | Dispersion Composition W14 | ○ |
| Example 2-W15 | Electrode film W15 | Composite slurry W15 | Dispersion Composition W15 | ⊚ |
| Example 2-W16 | Electrode film W16 | Composite slurry W16 | Dispersion Composition W16 | ○ |
| Example 2-W17 | Electrode film W17 | Composite slurry W17 | Dispersion Composition W17 | ○ |
| Example 2-W18 | Electrode film W18 | Composite slurry W18 | Dispersion Composition W18 | ⊚ |
| Example 2-W19 | Electrode film W19 | Composite slurry W19 | Dispersion Composition W19 | ⊚ |
| Example 2-N20 | Electrode film N20 | Composite slurry N20 | Dispersion Composition N20 | O |
| Comparative Example 2-W1 | Comparative electrode film W1 | Comparative composite slurry W1 | Comparative Dispersion Composition W1 | O |
| Comparative Example 2-W2 | Comparative electrode film W2 | Comparative composite slurry W2 | Comparative Dispersion Composition W2 | O |
| Comparative Example 2-W3 | Comparative electrode film W3 | Comparative composite slurry W3 | Comparative Dispersion Composition W3 | O |
| Comparative Example 2-W5 | Comparative electrode film W5 | Comparative composite slurry W5 | Comparative Dispersion Composition W5 | O |
| Comparative Example 2-W6 | Comparative electrode film W6 | Comparative composite slurry W6 | Comparative Dispersion Composition W6 | O |
| Comparative Example 2-W7 | Comparative electrode film W7 | Comparative composite slurry W7 | Comparative Dispersion Composition W7 | O |
| Comparative Example 2-W8 | Comparative electrode film W8 | Comparative composite slurry W8 | Comparative Dispersion Composition W8 | O |
| Comparative Example 2-W10 | Comparative electrode film W10 | Comparative composite slurry W10 | Comparative Dispersion Composition W10 | △ |
| Comparative Example 2-W11 | Comparative electrode film W11 | Comparative composite slurry W11 | Comparative Dispersion Composition W11 | △ |

### (Example 3-W1)

The negative electrode W1and a standard positive electrode were punched out in a size of 50 mm × 45 mm and 45 mm × 40 mm, respectively, and inserted into an aluminum laminate bag together with a separator (porous polypropylene film) to be placed between them, and dried in an electric oven at 60°C for 1 hour. Subsequently, 2 mL of an electrolyte (a mixed solvent was prepared by mixing, at a ratio (volume ratio) of 3:5:2, ethylene carbonate, ethyl methyl carbonate, and dimethyl carbonate, and, as an additive, 1 part by mass of each of vinylene carbonate (VC) and fluoroethylene carbonate (FEC) was added to 100 parts by mass of the mixed solvent, and then LiPF₆ was further dissolved at a concentration of 1M to obtain a non-aqueous electrolyte) was injected into a glove box filled with argon. After that, an aluminum-made laminate was sealed to prepare a laminate-type lithium-ion secondary battery (secondary battery W1).

(Examples 3-W2 to 3-W19), (Comparative Examples 3-W2 to 3-W11) Laminate-type lithium-ion secondary batteries (secondary battery W2) to (comparative secondary battery W11) were prepared by the same method as the preparation of the laminate-type lithium-ion secondary battery (secondary battery W1), except that the negative electrodes were changed to those listed in Table B5.

### (Example 3-N20)

A standard negative electrode and the positive electrode N20 were punched out in a size of 50 mm × 45 mm and 45 mm × 40 mm, respectively, and inserted into an aluminum laminate bag together with a separator (porous polypropylene film) to be placed between them, and dried in an electric oven at 60°C for 1 hour. Subsequently, 2 mL of an electrolyte (a mixed solvent was prepared by mixing, at a ratio (volume ratio) of 3:5:2, ethylene carbonate, ethyl methyl carbonate, and dimethyl carbonate, and, as an additive, 1 part by mass of each of vinylene carbonate (VC) and fluoroethylene carbonate (FEC) was added to 100 parts by mass of the mixed solvent, and then LiPF₆ was further dissolved at a concentration of 1M to obtain a non-aqueous electrolyte) was injected into a glove box filled with argon. After that, an aluminum-made laminate was sealed to prepare a laminate-type lithium-ion secondary battery (secondary battery N20).

Table B5 shows the evaluation results of the laminate-type lithium-ion secondary batteries prepared in (Examples 3-W1 to 3-N20) and (Comparative Examples 3-W1 to 3-W11).

### [Table B5]

**Table B5**

| Secondary battery | | Positive electrode/ Negative electrode | Evaluation results | |
|---|---|---|---|---|
| | | | Rate properties | High-temperature cycle properties |
| Example 3-W1 | Secondary battery W1 | Negative electrodeW1 | ○ | △ |
| Example 3-W2 | Secondary battery W2 | Negative electrodeW2 | ○ | △ |
| Example 3-W3 | Secondary battery W3 | Negative electrodeW3 | ○ | ○ |
| Example 3-W4 | Secondary battery W4 | Negative electrodeW4 | ○ | ○ |
| Example 3-W5 | Secondary battery W5 | Negative electrodeW5 | ○ | ○ |
| Example 3-W6 | Secondary battery W6 | Negative electrodeW6 | ⊚ | ○ |
| Example 3-W7 | Secondary battery W7 | Negative electrodeW7 | ⊚ | ○ |
| Example 3-W8 | Secondary battery W8 | Negative electrodeW8 | ⊚ | ○ |
| Example 3-W9 | Secondary battery W9 | Negative electrodeW9 | ⊚ | ○ |
| Example 3-W10 | Secondary battery W10 | Negative electrodeW10 | ⊚ | ○ |
| Example 3-W11 | Secondary battery W11 | Negative electrodeW11 | ⊚ | △ |
| Example 3-W12 | Secondary battery W12 | Negative electrodeW12 | ⊚ | △ |
| Example 3-W13 | Secondary battery W13 | Negative electrodeW13 | ⊚ | △ |
| Example 3-W14 | Secondary battery W14 | Negative electrodeW14 | △ | ○ |
| Example 3-W15 | Secondary battery W15 | Negative electrodeW15 | ⊚ | ⊚ |
| Example 3-W16 | Secondary battery W16 | Negative electrodeW16 | △ | △ |
| Example 3-W17 | Secondary battery W17 | Negative electrodeW17 | ○ | ○ |
| Example 3-W18 | Secondary battery W18 | Negative electrodeW18 | ○ | ⊚ |
| Example 3-W19 | Secondary battery W19 | Negative electrodeW19 | ○ | ⊚ |
| Example 3-N20 | Secondary battery N20 | Positive electrode N20 | ○ | ○ |
| Comparative Example 3-W1 | Comparative secondary batteryW1 | Comparative negative electrodeW1 | ○ | × |
| Comparative Example 3-W2 | Comparative secondary batteryW2 | Comparative negative electrodeW2 | ○ | × |
| Comparative Example 3-W3 | Comparative secondary batteryW3 | Comparative negative electrodeW3 | ○ | × |
| Comparative Example 3-W5 | Comparative secondary batteryW5 | Comparative negative electrodeW5 | ○ | × |
| Comparative Example 3-W6 | Comparative secondary batteryW6 | Comparative negative electrodeW6 | ○ | × |
| Comparative Example 3-W7 | Comparative secondary batteryW7 | Comparative negative electrodeW7 | ○ | × |
| Comparative Example 3-W8 | Comparative secondary batteryW8 | Comparative negative electrodeW8 | ○ | × |
| Comparative Example 3-W10 | Comparative secondary batteryW10 | Comparative negative electrodeW10 | × | × |
| Comparative Example 3-W11 | Comparative secondary batteryW11 | Comparative negative electrodeW11 | × | △ |

In the above examples, a carbon nanotube dispersion composition was used that included carbon nanotubes, a dispersant, and a solvent, and the content of metal foreign particles determined according to Condition 1 was 1.0 mg or less. In the examples, compared to the comparative examples, the carbon nanotube dispersion composition had a lower initial viscosity, and lithium-ion secondary batteries with superior secondary battery properties, especially high-temperature cycle properties, were obtained. Therefore, it became clear that the invention can provide lithium-ion secondary batteries with high capacity, high output, and high durability, which are difficult to achieve with conventional carbon nanotubes dispersion compositions.

Vehicles having the lithium-ion secondary batteries of the invention can achieve high safety and improved fuel efficiency, as the batteries possess high charge-discharge performance and excellent high-temperature cycle properties.

The invention has been described with reference to the embodiments, but the invention is not limited to the descriptions. Various modifications can be made to the structure and details of the invention within the scope of the invention as understood by those skilled in the art.

## Claims

1. A carbon nanotube dispersion composition, comprising: carbon nanotubes; a dispersant; and a solvent,
wherein a content of metal foreign particles determined according to Condition 1 as follows is 1.0 mg or less,
<Condition 1>
wherein after the metal foreign particles in 20 kg of the carbon nanotube dispersion composition are recovered by using an electromagnet, which is equipped with 31 grid screens having a magnetic flux density of 16000 gauss, a spatial volume of 1.7 L, a diameter of 10 cm and a thickness of 1.3 cm, the metal foreign particles that are obtained through washing with the solvent are deposited on a filter with a disk diameter of 47 mm and an opening of 5 µm, and a weight of the metal foreign particles on the filter is then measured.

2. The carbon nanotube dispersion composition as claimed in claim 1, wherein the dispersant comprises at least one selected from a group consisting of carboxymethyl cellulose, polyacrylic acid, polyvinylpyrrolidone, and an acrylonitrile-based polymer.

3. The carbon nanotube dispersion composition as claimed in claim 1 or 2, wherein the dispersant comprises a copolymer, and the copolymer has an alkylene structural unit with a content ratio of 50 mass% or more and 75 mass% or less, and a nitrile group-containing structural unit with a content ratio of 25 mass% or more and 50 mass% or less.

4. The carbon nanotube dispersion composition as claimed in any one of claims 1 to 3, wherein the solvent comprises water.

5. The carbon nanotube dispersion composition as claimed in any one of claims 1 to 4, wherein the solvent comprises an amide-based polar solvent.

6. The carbon nanotube dispersion composition as claimed in any one of claims 1 to 5, wherein a cumulative particle size D₉₀ measured by a laser diffraction method is 10 µm or less.

7. The carbon nanotube dispersion composition as claimed in any one of claims 1 to 5, wherein a cumulative particle size D₉₀ measured by a laser diffraction method is 6.0 µm or less.

8. A carbon nanotube dispersion composition, comprising: carbon nanotubes; a dispersant; and water,
wherein a content of metal foreign particles determined according to Condition 1 as follows is 1.0 mg or less, and
a cumulative particle size D₉₀ measured by a laser diffraction method is 6.0 µm or less,
<Condition 1>
wherein after the metal foreign particles in 20 kg of the carbon nanotube dispersion composition are recovered by using an electromagnet, which is equipped with 31 grid screens having a magnetic flux density of 16000 gauss, a spatial volume of 1.7 L, a diameter of 10 cm and a thickness of 1.3 cm, the metal foreign particles that are obtained through washing with the water are deposited on a filter with a disk diameter of 47 mm and an opening of 5 µm, and a weight of the metal foreign particles on the filter is then measured.

9. A carbon nanotube dispersion composition, comprising: carbon nanotubes; a copolymer; and an amide-based polar solvent,
wherein a content of metal foreign particles determined according to Condition 1 as follows is 1.0 mg or less,
the copolymer comprises an alkylene structural unit with a content ratio of 50 mass% or more and 75 mass% or less, and a nitrile group-containing structural unit with a content ratio of 25 mass% or more and 50 mass% or less,
a cumulative particle size D₉₀ measured by a laser diffraction method is 6.0 µm or less,
<Condition 1>
wherein after the metal foreign particles in 20 kg of the carbon nanotube dispersion composition are recovered by using an electromagnet, which is equipped with 31 grid screens having a magnetic flux density of 16000 gauss, a spatial volume of 1.7 L, a diameter of 10 cm and a thickness of 1.3 cm, the metal foreign particles that are obtained through washing with the amide-based polar solvent are deposited on a filter with a disk diameter of 47 mm and an opening of 5 µm, and a weight of the metal foreign particles on the filter is then measured.

10. The carbon nanotube dispersion composition as claimed in any one of claims 1 to 9, wherein a total content of iron, cobalt, nickel, chromium, molybdenum, and copper is 100 ppm or less.

11. The carbon nanotube dispersion composition as claimed in any one of claims 1 to 10, wherein a repose angle of the carbon nanotubes is 40° or more.

12. The carbon nanotube dispersion composition as claimed in any one of claims 1 to 11, wherein a viscosity at 25°C measured by a B-type viscometer is less than 2,000 mPa·s.

13. The carbon nanotube dispersion composition as claimed in any one of claims 1 to 12, wherein the carbon nanotubes have a BET specific surface area of 500 m²/g to 1200 m²/g.

14. The carbon nanotube dispersion composition as claimed in any one of claims 1 to 13, wherein the carbon nanotubes have a G/D ratio of 5 to 100, G being a maximum peak intensity in a range of 1560 cm⁻¹ to 1600 cm⁻¹ and D being a maximum peak intensity in a range of 1310 cm⁻¹ to 1350 cm⁻¹ in a Raman spectrum.

15. A composite slurry, comprising: the carbon nanotube dispersion composition as claimed in any one of claims 1 to 14; and an active substance.

16. An electrode film, formed from the composite slurry as claimed in claim 15.

17. A secondary battery, comprising a positive electrode and a negative electrode,
wherein at least one of the positive electrode and the negative electrode comprises the electrode film as claimed in claim 16.

18. A vehicle, comprising the secondary battery as claimed in claim 17.

19. A method for manufacturing the carbon nanotube dispersion composition as claimed in any one of claims 1 to 14, the method comprising all of Steps (1) to (3) as follows:
[Step (1): Pulverization step]
a step of applying a shear force to the carbon nanotubes to pulverize the carbon nanotubes;
[Step (2): Magnetic separation step]
a step of removing the metal foreign particles by using the electromagnet with a magnetic flux density of 10000 gauss or more and 20000 gauss or less; and
[Step (3): Filtration step]
a step of performing filtration using a depth filter with a filtration accuracy of 5 µm or more and 50 µm or less.
